(19) **Europäisches Patentamt**
**European Patent Office**
**Office européen des brevets**

(11) **EP 4 656 763 A1**

(12) **EUROPÄISCHE PATENTANMELDUNG**

(43) Veröffentlichungstag:
**03.12.2025   Patentblatt 2025/49**

(21) Anmeldenummer: **24178358.8**

(22) Anmeldetag: **28.05.2024**

(51) Internationale Patentklassifikation (IPC):
**C23C 2/02** (2006.01)      **C21D 8/02** (2006.01)
**C21D 8/04** (2006.01)      **C21D 9/46** (2006.01)
**C23C 2/12** (2006.01)      **C23C 2/16** (2006.01)
**C23C 2/18** (2006.01)      **C23C 2/20** (2006.01)
**C23C 2/26** (2006.01)      **C23C 2/28** (2006.01)
**C23C 28/02** (2006.01)      **C23C 28/00** (2006.01)
**C23C 30/00** (2006.01)      **C22C 38/04** (2006.01)
**C22C 21/02** (2006.01)      **C22C 21/06** (2006.01)
**C22C 21/10** (2006.01)      **C21D 6/00** (2006.01)
**C21D 7/13** (2006.01)

(52) Gemeinsame Patentklassifikation (CPC):
**C23C 30/00; B32B 15/012; C21D 1/18;**
**C21D 1/673; C21D 6/002; C21D 7/13;**
**C21D 8/0205; C21D 8/0226; C21D 8/0273;**
**C21D 8/0278; C21D 9/46; C22C 21/02;**
**C22C 38/002; C22C 38/008; C22C 38/02;**   (Forts.)

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **ThyssenKrupp Steel Europe AG**
**47166 Duisburg (DE)**

(72) Erfinder:
• **Bienholz, Dr. Stefan**
  **47166 Duisburg (DE)**
• **Stille, Dr. Sebastian**
  **47166 Duisburg (DE)**

(74) Vertreter: **ThyssenKrupp Steel Europe AG**
**Patente/Patent Department**
**Kaiser-Wilhelm-Straße 100**
**47166 Duisburg (DE)**

(54) **BLECHFORMTEIL MIT EINER PHOSPHATIERBAREN BESCHICHTUNG UND VERFAHREN ZU DESSEN HERSTELLUNG**

(57) Die Erfindung betrifft ein Stahlflachprodukt zur Herstellung eines Blechformteils durch Warmumformen. Dabei weist das Stahlflachprodukt ein Stahlsubstrat auf, das aus einem Stahl, der 0,1 - 3 Gew.-% Mn und optional bis zu 0,01 Gew.-% B aufweist, besteht. Weiterhin weist das Stahlflachprodukt einen auf mindestens einer Seite des Stahlsubstrats angeordneten Korrosionsschutzüberzug auf Aluminium-Basis auf, wobei der Korrosionsschutzüberzug eine Al-Basisschicht aufweist, die aus 1,0 - 15,0 Gew.-% Si, optional 2 - 4 Gew.-% Fe, 0,55 - 2,00 Gew.-% Mg, 0,50 - 2,00 Gew.-% Zn, und optionalen weiteren Bestandteilen, deren Gehalte in Summe auf höchstens 2,0 Gew.-% beschränkt sind, und als Rest Aluminium besteht. Die Erfindung betrifft weiterhin ein Verfahren zur Herstellung eines solchen Stahlflachproduktes und ein Blechformteil, das aus einem solchen Stahlflachprodukt hergestellt wird.

(52) Gemeinsame Patentklassifikation (CPC): (Forts.)
**C22C 38/04; C22C 38/20; C22C 38/22;
C22C 38/26; C22C 38/28; C22C 38/32;
C22C 38/38; C23C 2/02; C23C 2/022;
C23C 2/0224; C23C 2/12; C23C 2/16; C23C 2/18;
C23C 2/20; C23C 2/26; C23C 2/29; C23C 28/02;
C23C 28/021; C23C 28/023; C23C 28/30;
C23C 28/32; C23C 28/322; C23C 28/34;
C23C 28/345;** C21D 2211/008

**Beschreibung**

Die Erfindung betrifft ein Stahlflachprodukt mit einem Korrosionsschutzüberzug, ein Verfahren zur Herstellung eines solchen Stahlflachprodukts, ein Blechformteil herstellbar aus einem solchen Stahlflachprodukt und ein Verfahren zur Herstellung eines Blechformteils aus einem solchen Stahlflachprodukt.

Wenn nachfolgend von einem "Stahlflachprodukt" oder auch von einem "Blechprodukt" die Rede ist, so sind damit Walzprodukte, wie Stahlbänder oder -bleche gemeint, aus denen für die Herstellung von beispielsweise Karosseriebauteilen "Blechzuschnitte" (auch Platinen genannt) abgeteilt werden. "Blechformteile" der erfindungsgemäßen Art sind aus derartigen Blechzuschnitten durch Umformen hergestellt.

Alle Angaben zu Gehalten der in der vorliegenden Anmeldung angegebenen Stahlzusammensetzungen sind auf das Gewicht bezogen, sofern nicht ausdrücklich anders erwähnt. Alle nicht näher bestimmten, im Zusammenhang mit einer Stahllegierung stehenden "%-Angaben" sind daher als Angaben in "Gew.-%" zu verstehen. In diesem Text gemachte Angaben zu den Gehalten der Bestandteile einer Atmosphäre beziehen sich auf das Volumen (Angabe in "Vol.-%").

Aus dem Stand der Technik, beispielsweise der EP 2 086 755 B1, sind Stahlflachprodukte für die Warmumformung zu Blechformteilen bekannt, die eine aluminiumbasierte Beschichtung aufweisen. Die Beigabe von geringen Mengen an Magnesium in den Korrosionsschutzüberzug zur Reduzierung des Eintrags von Wasserstoff in das Stahlsubstrat ist ebenfalls bekannt aus der EP 3 189 174 B1. Solche Beschichtungen bieten einen guten Korrosionsschutz.

Derartige aluminiumbasierte Beschichtungen haben den Nachteil, dass es beim Warmumformen aufgrund der Temperaturen zu einer sehr starken Oxidation der aluminiumreichen Oberfläche kommt. Diese Aluminiumoxidschicht führt wiederum dazu, dass ein nachfolgender Phosphatierungsschritt nur unzureichend funktioniert. Die Aluminiumoxidschicht verhindert die Bildung von fest haftenden Metallphosphaten bei der Phosphatierung, da beim Phosphatieren typischerweise die Prozessparameter nicht ausreichend sind, um die Aluminiumoxidschicht aufzubrechen. Das resultierende Stahlbauteil hat in dem Fall eine starke Anfälligkeit gegenüber kosmetischer Korrosion. Diese beeinträchtigt zwar nicht die strukturelle Stabilität des Stahlbauteils, wird jedoch zu einer verminderten Ästhetik des Stahlbauteils, welche vom Endkunden nicht gewünscht ist.

Aus der WO 2023/202765 A1 ist bekannt, dieses Problem durch die Beigabe von bis zu 5 % Zink (bezogen auf die Masse des Schutzüberzuges ohne Eisen und Mangan) beim Schutzüberzug des Stahlflachproduktes zu beheben. Gleichzeitig werden Mg-Gehalte des Schutzüberzuges von 0,10 - 0,50 % (bezogen auf die Masse des Schutzüberzuges ohne Eisen und Mangan) offenbart.

Die Beilegierung von Zink hat jedoch entscheidende Nachteile. Zink hat einen relativ niedrigen Schmelzpunkt. Bei der Herstellung des Stahlbauteils durch Warmumformung können sich flüssige Zn-Phasen bilden. Diese können einerseits in das Stahlsubstrat eindringen und zur Rissbildung beitragen (Flüssigmetallversprödung) und andererseits an Umformwerkzeugen oder Ofenrollen haften bleiben, was zu Verschmutzung und Schichtablösung führt.

Aufgabe der vorliegenden Erfindung ist daher, eine gute Phosphatierbarkeit des Blechformteils zu erreichen und gleichzeitig die Nachteile der Beilegierung von Zink weitestgehend zu vermeiden.

Diese Aufgabe wird gelöst durch ein Stahlflachprodukt zur Herstellung eines Blechformteils durch Warmumformen, aufweisend ein Stahlsubstrat, das aus einem Stahl, der 0,1 - 3 Gew.-% Mn und optional bis zu 0,01 Gew.-% B aufweist, besteht und einen auf mindestens einer Seite des Stahlsubstrats angeordneten Korrosionsschutzüberzugs auf Aluminium-Basis, dadurch gekennzeichnet, dass der Korrosionsschutzüberzug eine Al-Basisschicht aufweist, die aus 1,0 - 15 Gew.-% Si, optional 2 - 4 Gew.-% Fe, 0,55 - 2,00 Gew.-% Magnesium, 0,40 - 2,00 Gew.-% Zn, und optionalen weiteren Bestandteilen, deren Gehalte in Summe auf höchstens 2,0 Gew.-% beschränkt sind, und als Rest Aluminium besteht.

Überraschend hat sich gezeigt, dass durch die Zugabe eines im Vergleich zum Stand der Technik erhöhten Mg-Anteils von mindestens 0,55 % der Zink-Anteil auf maximal 2,00 % reduziert werden kann, ohne die guten Phosphatierungseigenschaften zu verlieren. Bei gleichbleibendem Zink-Anteil werden die Phosphatierungseigenschaften sogar durch die Erhöhung des Mg-Anteils verbessert.

Dieser Effekt ergibt sich durch das unterschiedliche Verhalten der Elemente bei der Aufheizung vor der Warmumformung. Zink hat einen vergleichbar niedrigen Schmelzpunkt. Bei der Aufheizung können sich deshalb schmelzflüssige Zink-Phasen bilden, die in das Substrat eintreten und Flüssigmetallversprödung verursachen können. Daher ist ein zu hoher Zink-Anteil zu vermeiden. Weiterhin hat Zink die Eigenschaft, sich bei der Aufheizung an der Oberfläche des Korrosionsschutzüberzuges anzureichern. Dort kann es schnell Abdampfen oder oxidieren. Dies ist ebenfalls nachteilig. Um eine gute Phosphatierbarkeit zu erreichen, muss nach der Warmumformung an der Oberfläche eine ausreichende Menge elementares Zink vorliegen. Dieses elementare Zink bildet dann während der nachfolgenden Phosphatierung fest haftende Zinkphosphate. Um also eine gleichmäßige Phosphatierung zu gewährleisten, ist eine ausreichende Menge Zink an der Oberfläche erforderlich, der jedoch nicht oxidiert sein darf. Dies lässt sich beispielsweise durch die Erhöhung des Zink-Anteils gewährleisten, was aber wiederum das Risiko von Flüssigmetallversprödung erhöht. Bei bevorzugten Ausführungsformen beträgt der Zn-Gehalt mindestens 0,50 Gew.-%, insbesondere mindestens 0,70 Gew.-%, bevorzugt mindestens 1,10 Gew.-%, insbesondere mindestens 1,30 Gew.-%. Unabhängig davon beträgt der Zn-Gehalt maximal 1,80 Gew.-%, bevorzugt maximal 1,50 Gew.-%, insbesondere maximal 1,30 Gew.-%, bevorzugt maximal 1,00 Gew.-%, insbesondere maximal 0,75 Gew.-%, bevorzugt maximal 0,65 Gew.-%. Es hat sich gezeigt, dass diese Ausführungsvarianten einen guten Kompromiss zwischen der Phosphatierbarkeit und dem Risiko der Flüssigmetallversprödung darstellen.

Magnesium hat ebenfalls die Eigenschaft sich bei der Aufheizung an der der Oberfläche des Korrosionsschutzüberzuges anzureichern. Zudem ist Magnesium in der elektrochemischen Spannungsreihe deutlich unedler als Zink und Aluminium. Dies führt dazu, dass sich bei einem ausreichenden Magnesium-Anteil während der Aufheizung eine schützende MgO-Schicht bildet. Diese verhindert sowohl die Abdampfung von Zink als auch die Oxidation von Zink. Daher führt der erhöhte Mg-Anteil von mindestens 0,55 % dazu, dass auch bei einem geringen Zink-Gehalt von maximal 2,00 % eine ausreichende Menge elementaren Zinks an der Oberfläche des Korrosionsschutzüberzuges für die nachfolgende Phosphatierung zur Verfügung steht. Der Magnesium-Anteil darf jedoch auch nicht zu hoch sein, da sich ansonsten eine zu dicke, durchgehende MgO-Schicht bildet, die die nachfolgende Phosphatierung behindert. Versuche haben gezeigt, dass mit einem Mg-Anteil von 0,55 - 2,00 Gew.-% beide Effekte realisiert werden können. Es wird die Abdampfung und Oxidation von Zink verhindert und gleichzeitig ist die sich bildende MgO-Schicht nicht so dick, dass sie die Phosphatierung behindert. Bei bevorzugten Ausführungsvarianten beträgt der Mg-Anteil mindestens 0,60 Gew.-%, insbesondere mindestens 0,70 Gew.-%, bevorzugt mindestens 0,80 Gew.-%. Unabhängig davon beträgt bei bevorzugten Ausführungsformen der Mg-Anteil maximal 1,90 Gew.-%, insbesondere maximal 1,75 Gew.-%, bevorzugt maximal 1,50 Gew.-%.

Bei einer bevorzugten Variante beträgt der Si-Gehalt der Al-Basisschicht 7 - 12 Gew.-%, insbesondere 8 - 10 Gew.-%.

Das Stahlsubstrat besteht aus einem Stahl, der 0,1 - 3 Gew.-% Mn und optional bis zu 0,01 Gew.-% B aufweist. Insbesondere ist das Gefüge des Stahls durch ein Warmumformen in ein martensitisches oder teilweise martensitisches Gefüge umwandelbar. Das Gefüge des Stahlsubstrates des Blechformteils ist also bevorzugt ein martensitisches oder zumindest teilweise martensitisches Gefüge, da dieses eine besonders hohe Härte aufweist.

Besonders bevorzugt besteht das Stahlsubstrat aus einem Stahl, der neben Eisen und unvermeidbaren Verunreinigungen (in Gew.-%) aus

| C: | 0,04 - 0,45 Gew.-%, |
|---|---|
| Si: | 0,02 - 1,2 Gew.-%, |
| Mn: | 0,5 - 2,6 Gew.-%, |
| Al: | 0,02 - 1,0 Gew.-%, |
| P: | ≤ 0,05 Gew.-%, |
| S: | ≤ 0,02 Gew.-%, |
| N: | ≤ 0,02 Gew.-%, |
| Sn: | ≤ 0,03 Gew.-%, |
| As: | ≤ 0,010 Gew.-%, |
| Ca: | ≤ 0,005 Gew.-%, |

sowie optional einem oder mehreren der Elemente "Cr, B, Mo, Ni, Cu, Nb, Ti, V, W" in folgenden Gehalten

| Cr: | 0,08 - 1,0 Gew.-%, |
|---|---|
| B: | 0,001 - 0,010 Gew.-%, |
| Mo: | ≤ 0,5 Gew.-%, |
| Ni: | ≤ 0,5 Gew.-%, |
| Cu: | ≤ 0,2 Gew.-%, |
| Nb: | 0,01 - 0,2 Gew.-%, |
| Ti: | 0,008 - 0,10 Gew.-%, |
| V: | ≤ 0,3 Gew.-%, |
| W: | 0,001 - 1,00 Gew.-%, |

besteht.

Bei den Elementen P, S, N, Sn, As, Ca handelt es sich um Verunreinigungen, die bei der Stahlerzeugung nicht vollständig vermieden werden können. Gelegentlich wird Ca auch bewusst zur Abbindung von Schwefel hinzulegiert. In einem solchen Fall beträgt der Gehalt von Ca mindestens 0,001 Gew.-%. Maximal beträgt der Ca-Gehalt auch in diesem Fall 0,005 Gew.-%.

Neben diesen Elementen können auch noch weitere Elemente als Verunreinigungen im Stahl vorhanden sein. Diese weiteren Elemente werden unter den "unvermeidbaren Verunreinigungen" zusammengefasst. Bevorzugt beträgt der Gehalt an unvermeidbaren Verunreinigungen in Summe maximal 0,2 Gew.-%, bevorzugt maximal 0,1 Gew.-%. Die optionalen Legierungselemente Cr, B, Nb, Ti, für die eine Untergrenze angegeben ist, können auch in Gehalten unterhalb der jeweiligen Untergrenze als unvermeidbare Verunreinigungen im Stahlsubstrat vorkommen. In dem Fall werden sie ebenfalls zu den unvermeidbaren Verunreinigungen gezählt, deren Gesamtgehalt auf maximal 0,2 Gew.-%, bevorzugt maximal 0,1 Gew.-% begrenzt ist. Bevorzugt sind die individuellen Obergrenzen für die jeweilige Verunreinigung dieser Elemente wie folgt:

| | |
|---|---|
| Cr: | $\leq$ 0,050 Gew.-%, |
| B: | $\leq$ 0,0005 Gew.-%, |
| Nb: | $\leq$ 0,005 Gew.-%, |
| Ti: | $\leq$ 0,005 Gew.-%. |

Dabei sind diese bevorzugten Obergrenzen als alternativ oder gemeinsam zu betrachten. Bevorzugte Varianten des Stahls erfüllen also eine oder mehrere dieser vier Bedingungen.

Bei einer eine bevorzugten Ausführungsform beträgt der C-Gehalt des Stahls maximal 0,37 Gew.-% und/oder mindestens 0,06 Gew.-%. Bei besonders bevorzugten Ausführungsvarianten liegt der C-Gehalt im Bereich von 0,06 - 0,09 Gew.-% oder im Bereich von 0,11 - 0,25 Gew.-% oder im Bereich von 0,32 - 0,37 Gew.-%.

Kohlenstoff wirkt in erfindungsgemäßen Stahlflachprodukten verzögernd auf die Bildung von Ferrit und Bainit. Gleichzeitig wird Restaustenit stabilisiert und die Ac3-Temperatur verringert. Ein Kohlenstoffgehalt von mindestens 0,06 Gew.-% ist vorteilhaft, um die Härtbarkeit des Stahlflachprodukts und die Zugfestigkeit des pressgehärteten Produkts mindestens 1000 MPa zu gewährleisten. Soll ein höheres Festigkeitsniveau angestrebt werden, so werden bevorzugt C-Gehalte > 0,12 Gew.-% eingestellt. Wird der C-Gehalt weiter angehoben auf Werte von mindestens 0,19 Gew.-%, so kann überdies die Härtbarkeit verbessert werden, sodass das Stahlflachprodukt eine sehr gute Kombination aus Härtbarkeit und Festigkeit aufweist. Kohlenstoffgehalte größer 0,45 Gew.-% wirken sich jedoch nachteilig auf die mechanischen Eigenschaften des Stahlflachprodukts aus, da C-Gehalte größer 0,45 Gew.-% während des Presshärtens die Bildung spröden Martensits fördern. Durch hohe C-Gehalte kann darüber hinaus die Schweißbarkeit negativ beeinflusst werden. Um die Schweißbarkeit zu verbessern, kann der Kohlenstoffgehalt bevorzugt auf Werte kleiner 0,40 Gew.-%, insbesondere 0,3 Gew.-% eingestellt werden. Insbesondere bei C-Gehalten < 0,25 Gew.-% kann die Schweißbarkeit nochmals deutlich verbessert und zusätzlich ein gutes Verhältnis von Kraftaufnahme und maximalem Biegewinkel im Biegeversuch nach VDA 238-100 im pressgehärteten Zustand erreicht werden.

Bei einer eine bevorzugten Ausführungsform beträgt der Si-Gehalt des Stahls maximal 1,00 Gew.-% und/oder mindestens 0,06 Gew.-%.

Silizium wird zur weiteren Erhöhung der Härtbarkeit des Stahlflachprodukts sowie der Festigkeit des pressgehärteten Produkts über Mischkristallverfestigung verwendet. Silizium ermöglicht außerdem den Einsatz von Ferro-Silizio-Mangan als Legierungsmittel, was sich begünstigend auf die Produktionskosten auswirkt. Ab einem Si-Gehalt von 0,06 Gew.-% stellt sich bereits ein Härtungseffekt ein. Ab einem Si-Gehalt von mindestens 0,15 Gew.-% tritt ein signifikanter Anstieg der Festigkeit auf. Si-Gehalte oberhalb von 0,5 Gew.-% wirken sich nachteilig auf das Beschichtungsverhalten aus, insbesondere bei Al-basierten Beschichtungen. Si-Gehalte von maximal 0,4 Gew.-% werden bevorzugt eingestellt, um die Oberflächenqualität des beschichteten Stahlflachprodukts zu verbessern.

Der Mn-Gehalt des Stahls beträgt bei einer bevorzugten Variante maximal 2,4 Gew.-% und/oder mindestens 0,75 Gew.-%. Bei besonders bevorzugten Ausführungsvarianten liegt der Mn-Gehalt im Bereich von 0,75 - 0,85 Gew.-% oder im Bereich von 1,0 - 1,6 Gew.-%.

Mangan wirkt als härtendes Element, indem es die Ferrit- und die Bainitbildung stark verzögert. Bei Mangangehalten kleiner 0,5 Gew.-% werden während des Presshärtens selbst bei sehr schnellen Abkühlgeschwindigkeiten Ferrit und Bainit gebildet, was vermieden werden sollte. Mn-Gehalte größer 0,75 Gew.-%, insbesondere 0,9 Gew.-% sind bevorzugt, wenn ein martensitisches Gefüge insbesondere in Bereichen größerer Umformung gewährleistet werden soll. Mangangehalte größer 2,6 Gew.-% wirken sich nachteilig auf die Verarbeitungseigenschaften aus. Insbesondere die Schweißbarkeit ist stark eingeschränkt, weshalb der Mn-Gehalt erfindungsgemäßer Stahlflachprodukte auf höchstens 2,4 Gew.-%, insbesondere auf höchstens 1,6 Gew.-% beschränkt ist. Mangangehalte kleiner 1,6 Gew-% werden darüber hinaus auch aus ökonomischen Gründen bevorzugt.

Der Al-Gehalt des Stahls beträgt bei einer bevorzugten Variante maximal 0,75 Gew.-%, insbesondere maximal 0,5 Gew.-%, bevorzugt maximal 0,25 Gew.-%. Alternativ oder ergänzend beträgt der Al-Gehalt bevorzugt mindestens 0,02 %.

Aluminium wird als Desoxidationsmittel zur Abbindung von Sauerstoff eingesetzt. Zudem hemmt Aluminium die Zementitbildung. Zur sicheren Abbindung von Sauerstoff werden mindestens 0,02 Gew.-% Al im Stahl benötigt. Da allerdings auch die Ac3-Temperatur deutlich mit steigendem Al-Legierungsgehalt nach oben verschoben wird, ist der Al-Gehalt bevorzugt auf 0,25 Gew.-% begrenzt. Ab einem Gehalt von 0,25 Gew.-% behindert Al die Umwandlung in den Austenit vor dem Presshärten zu stark, sodass die Austenitisierung nicht mehr zeit- und energieeffizient durchgeführt werden kann. Für übliche Ofentemperaturen zwischen 850 und 950 °C in der Warmumformung ist bevorzugt ein Al-Gehalt von höchstens 0,1 Gew.-% einzuhalten, um den Stahl dennoch vollständig zu austenitisieren.

Zudem hat sich gezeigt, dass es hilfreich sein kann, wenn die Summe der Gehalte von Silizium und Aluminium begrenzt sind. Bei einer bevorzugten Variante beträgt daher die Summe der Gehalte von Si und Al (üblicherweise bezeichnet als Si + Al) maximal 1,5 Gew.-%, bevorzugt maximal 1,2 Gew.-%. Ergänzend oder alternativ beträgt die Summe der Gehalte von Si und Al mindestens 0,06 Gew.-%, bevorzugt mindestens 0,08 Gew.-%.

Bei den Elementen P, S, N handelt es sich um typische Verunreinigungen, die bei der Stahlerzeugung nicht vollständig vermieden werden können. Bei bevorzugten Varianten beträgt der P-Gehalt maximal 0,03 Gew.-%. Unabhängig davon beträgt der S-Gehalt bevorzugt maximal 0,012 %. Zusätzlich oder ergänzend beträgt der N-Gehalt bevorzugt maximal 0,009 Gew.-%.

Phosphor (P) und Schwefel (S) sind Elemente, die als Verunreinigungen durch Eisenerz in den Stahl eingeschleppt werden und nicht vollständig im großtechnischen Stahlwerksprozess beseitigt werden können. Der P-Gehalt und der S-Gehalt sollten so gering wie möglich gehalten werden, da sich die mechanischen Eigenschaften wie zum Beispiel die Kerbschlagarbeit mit zunehmendem P-Gehalt bzw. S-Gehalt verschlechtern. Ab P-Gehalten von 0,1 Gew.-% tritt zudem eine zunehmende Versprödung des Martensits auf, weshalb der P-Gehalt eines erfindungsgemäßen Stahlflachprodukts auf maximal 0,05 Gew.-%, bevorzugt maximal 0,03 Gew.-% begrenzt ist. Der S-Gehalt eines erfindungsgemäßen Stahlflachprodukts ist auf maximal 0,02 Gew.-%, bevorzugt maximal 0,012 Gew.-% begrenzt.

Stickstoff (N) ist aufgrund des Stahlfertigungsprozesses in geringen Mengen im Stahl vorhanden. Der N-Gehalt ist möglichst gering zu halten und sollte weniger als 0,02 Gew.-% betragen. Insbesondere bei Legierungen, die Bor enthalten, ist Stickstoff schädlich, da es durch die Bildung von Bornitriden den umwandlungsverzögernden Effekt von Bor verhindert, weshalb der Stickstoffgehalt in diesem Fall maximal 0,010 Gew.-%, bevorzugt maximal 0,009 Gew.-%, betragen sollte.

Der Sn-Gehalt beträgt maximal 0,03 Gew.-%, bevorzugt maximal 0,02 Gew.-%. Der As-Gehalt beträgt maximal 0,010 Gew.-%, insbesondere maximal 0,005 Gew.-%.

Optional enthält der Stahl zudem Chrom mit einem Gehalt von 0,08 - 1,0 Gew.-%. Bevorzugt beträgt der Cr-Gehalt maximal 0,75 Gew.-%, insbesondere maximal 0,5 Gew.-%.

Chrom wird dem Stahl eines erfindungsgemäßen Stahlflachprodukts in Gehalten von 0,08 - 1,0 Gew.-% zugegeben. Chrom beeinflusst die Härtbarkeit des Stahlflachprodukts, indem es die diffusive Umwandlung während des Presshärtens verlangsamt. Chrom wirkt in erfindungsgemäßen Stahlflachprodukten ab einem Gehalt von 0,08 Gew.-% günstig auf die Härtbarkeit, wobei ein Cr-Gehalt > 0,1 Gew.-% für eine sichere Prozessführung, vor allem zur Verhinderung der Bainitbildung, bevorzugt wird. Enthält der Stahl mehr als 1,0 Gew.-% Chrom, so verschlechtert sich das Beschichtungsverhalten. Um eine gute Oberflächenqualität zu erhalten, kann der Cr-Gehalt bevorzugt auf maximal 0,75 Gew.-%, insbesondere maximal 0,5 Gew.-%. begrenzt sein.

Im Falle einer optionalen Zulegierung von Chrom ist bevorzugt die Summe der Gehalte von Chrom und Mangan begrenzt. Die Summe beträgt maximal 3,3 Gew.-%, insbesondere maximal 3,15 Gew.-%. Weiterhin beträgt die Summe mindestens 0,5 Gew.-%, bevorzugt mindestens 0,75 Gew.-%.

Bevorzugt enthält der Stahl optional zudem Bor mit einem Gehalt von 0,001 - 0,010 Gew.-%. Insbesondere beträgt der B-Gehalt maximal 0,005 Gew.-%, bevorzugt maximal 0,004 Gew.-%.

Bor kann optional hinzulegiert werden, um die Härtbarkeit des Stahlflachprodukts zu verbessern, indem auf den Austenitkorngrenzen angelagerte Boratome oder Borausscheidungen die Korngrenzenenergie verringern, wodurch die Nukleation von Ferrit während des Presshärtens unterdrückt wird. Ein deutlicher Effekt auf die Härtbarkeit tritt bei B-Gehalten von mindestens 0,001 Gew.-% auf. Bei B-Gehalten über 0,010 Gew.-% bilden sich hingegen vermehrt Borkarbide, Bornitride oder Bornitrokarbide, welche wiederum bevorzugte Keimstellen für die Nukleation von Ferrit darstellen und den härtenden Effekt wieder absenken. Aus diesem Grund wird der B-Borgehalt auf höchstens 0,010 Gew.-% beschränkt.

Bei einer Zulegierung von Bor wird bevorzugt auch Titan zur Abbindung von Stickstoff hinzulegiert. Der Ti-Gehalt sollte in diesem Fall dann bevorzugt mindestens das 3,42-fache des Gehalts in Gew.-% an Stickstoff betragen.

Optional kann der Stahl Molybdän mit einem Gehalt von maximal 0,5 Gew.-% enthalten, insbesondere maximal 0,1 Gew.-%.

Molybdän (Mo) kann zur Verbesserung der Prozessstabilität optional hinzugegeben werden, da es die Ferritbildung deutlich verlangsamt. Ab Gehalten von 0,002 Gew.-% bilden sich dynamisch Molybdän-Kohlenstoff-Cluster bis hin zu ultrafeinen Molybdänkarbiden auf den Korngrenzen, welche die Beweglichkeit der Korngrenzen und somit diffusive Phasenumwandlungen deutlich verlangsamen. Außerdem wird durch Molybdän die Korngrenzenenergie verringert, was die Nukleationsrate von Ferrit verringert. Aufgrund der hohen Kosten, welche mit einer Legierung von Molybdän verbunden sind, sollte der Mo-Gehalt höchstens 0,5 Gew.-%, bevorzugt maximal 0,3 Gew.-% betragen.

Optional kann der Stahl zudem Kupfer enthalten mit einem Gehalt von maximal 0,2 Gew.-%, bevorzugt maximal 0,15 Gew.-%.

Kupfer (Cu) kann optional hinzulegiert werden, um bei Zugaben von mindestens 0,01 Gew.-% die Härtbarkeit zu erhöhen. Darüber hinaus verbessert Kupfer den Widerstand gegen atmosphärische Korrosion unbeschichteter Bleche oder Schnittkanten.

Weiterhin kann der Stahl optional Nickel enthalten mit einem Gehalt von maximal 0,5 Gew.-%, bevorzugt maximal 0,15 Gew.-%.

Nickel (Ni) stabilisiert die austenitische Phase und kann optional hinzulegiert werden, um die Ac3-Temperatur zu verringern und die Bildung von Ferrit und Bainit zu unterdrücken. Nickel hat darüber hinaus einen positiven Einfluss auf die Warmwalzbarkeit, insbesondere, wenn der Stahl Kupfer enthält. Kupfer verschlechtert die Warmwalzbarkeit. Um dem negativen Einfluss von Kupfer auf die Warmwalzbarkeit entgegenzuwirken, können dem Stahl mindestens 0,01 Gew.-% Nickel hinzulegiert werden. Aus ökonomischen Gründen sollte der Nickelgehalt auf Anteile von maximal 0,5 Gew.-%, bevorzugt maximal 0,4 Gew.-% beschränkt bleiben.

Zudem kann der Stahl optional eines oder mehrere der Mikrolegierungselemente Nb, Ti und V enthalten. Dabei beträgt der optionale Nb-Gehalt mindestens 0,01 Gew.-%, insbesondere mindestens 0,02 Gew.-% und maximal 0,2 Gew.-%, bevorzugt maximal 0,08 Gew.-%, bevorzugt maximal 0,04 Gew.-%. Der optionale Ti-Gehalt beträgt mindestens 0,01 Gew.-% und maximal 0,10 Gew.-%, insbesondere maximal 0,08 Gew.-%, bevorzugt maximal 0,04 Gew.-%. Der optionale V-Gehalt beträgt maximal 0,3 Gew.-%, bevorzugt maximal 0,2 Gew.-%, insbesondere maximal 0,1 Gew.-%, bevorzugt maximal 0,05 Gew.-%.

Niob (Nb) kann optional hinzulegiert werden, um ab einem Gehalt von 0,01 Gew.-%, insbesondere ab 0,010 Gew.-% zur Kornfeinung beizutragen. Allerdings verschlechtert Niob die Rekristallisierbarkeit des Stahls. Bei einem Nb-Gehalt von über 0,1 Gew.-% lässt sich der Stahl nicht mehr in üblichen Durchlauföfen vor der Feuerbeschichtung rekristallisieren.

Titan (Ti) ist ein Mikrolegierungselement, welches optional hinzulegiert werden kann, um zur Kornfeinung beizutragen. Außerdem bildet Titan mit Stickstoff grobe Titannitride, weshalb der Ti-Gehalt vergleichsweise geringgehalten werden soll. Titan bindet Stickstoff ab und ermöglicht Bor so, seine stark ferrithemmende Wirkung zu entfalten. Für eine ausreichende Abbindung von Stickstoff wird mindestens das 3,42-fache des Stickstoffgehalts benötigt, wobei mindestens 0,008 Gew.-% Ti für eine ausreichende Verfügbarkeit hinzugegeben werden sollten. Bevorzugt beträgt der Titan-Gehalt mindestens 0,010 Gew.-%, bevorzugt mindestens 0,015 Gew.-%. Ab 0,1 Gew.-% Ti verschlechtert sich die Kaltwalzbarkeit und Rekristallisierbarkeit deutlich, weshalb größere Ti-Gehalte vermieden werden sollten.

Vanadium (V) ist ein sehr kohlenstoffaffines Element. Wenn Vanadium frei, das heißt in ungebundenem oder gelöstem Zustand, vorliegt, kann es übersättigt gelösten Kohlenstoff in Form von Karbiden oder Clustern binden oder zumindest seine Diffusionsgeschwindigkeit verringern. Entscheidend ist dabei, dass V in gelöstem Zustand vorliegt. Überraschenderweise haben sich insbesondere sehr geringe V-Gehalte als besonders günstig für die Alterungsbeständigkeit erwiesen. Bei höheren V-Gehalten können schon bei höheren Temperaturen größere Vanadiumkarbide ausscheiden, welche sich dann bei Temperaturen von 800 - 900 °C, welche typisch für Durchlaufglühen von Schmelztauchbeschichtungsanlagen sind, nicht mehr auflösen. Schon kleinste Mengen Vanadium von 0,001 Gew.-% können bereits freien Kohlenstoff bei der Anlagerung an Versetzungen behindern. Ab einem V-Gehalt von 0,2 Gew.-% tritt keine Verbesserung der Alterungsbeständigkeit mehr durch Vanadium auf. Die alterungshemmende Wirkung von Vanadium ist bei V-Gehalten bis zu 0,009 Gew.-% besonders ausgeprägt, wobei sich ein maximaler Effekt ab einem bevorzugten V-Gehalt von 0,002 Gew.-% einstellt. Bei V-Gehalten größer 0,009 Gew. -% bilden sich vermehrt Vanadiumkarbide. Vanadiumkarbide können ab einem Vanadiumgehalt im Stahl von 0,009 Gew. % nicht bei Temperaturen von 860 °C, welche zum Beispiel typisch für Glühtemperaturen in einer Schmelztauchbeschichtungsanlage sind, aufgelöst werden. Der Vanadium-Gehalt des Stahls eines erfindungsgemäßen Stahlflachprodukts ist zum einen aus Kostengründen auf höchstens 0,1 Gew.-% beschränkt. Zum anderen bewirken höhere V-Gehalte keine wesentliche Verbesserung der mechanischen Eigenschaften.

Im Falle einer optionalen Zulegierung von mehreren der Elemente Nb, Ti und V ist bevorzugt die Summe der Gehalte von Nb, Ti und V begrenzt. Die Summe beträgt maximal 0,1 Gew.-%, insbesondere maximal 0,068 Gew.-%. Weiterhin beträgt die Summe bevorzugt mindestens 0,015 Gew.-%.

Wolfram (W) kann optional in Gehalten von 0,001 - 1,0 Gew.-% zur Verlangsamung der Ferritbildung hinzulegiert werden. Ein positiver Effekt auf die Härtbarkeit ergibt sich bereits bei W-Gehalten von mindestens 0,001 Gew.-%. Aus Kostengründen wird maximal 1,0 Gew.-% Wolfram hinzulegiert.

Die vorstehenden Erläuterungen zu bevorzugten Stahlsubstraten gelten selbstverständlich ebenso für das Stahlsubstrat bzw. Stahl des im nachfolgenden beschriebene Blechformteils, sowie die Stahlsubstrate bzw. Stähle in den beschriebenen Herstellungsverfahren.

Bei einer speziellen Ausführungsform ist der Korrosionsschutzüberzug einseitig oder beidseitig auf dem Stahlflachprodukt aufgebracht. Als die beiden Seiten des Stahlflachproduktes werden die beiden sich gegenüberliegenden großen Flächen des Stahlflachproduktes bezeichnet. Die schmalen Flächen werden als Kanten bezeichnet.

Ein solcher Korrosionsschutzüberzug wird bevorzugt durch Schmelztauchbeschichten des Stahlflachproduktes erzeugt. Dabei wird das Stahlflachprodukt durch ein Schmelzbad geführt, wobei das Schmelzbad den auf das Stahlflachprodukt aufzubringenden Korrosionsschutzüberzug in flüssiger Form enthält und aus 1,0 - 15,0 Gew.-% Si, optional 2 - 4 Gew.-% Fe, 0,55 - 2,00 Gew.-% Mg, 0,50 - 2,00 Gew.-% Zn, und optionalen weiteren Bestandteilen, deren Gehalte in Summe auf höchstens 2,0 Gew.-% beschränkt sind, und als Rest Aluminium besteht.

Bei einer bevorzugten Variante beträgt der Si-Gehalt der Schmelze 0,5 - 5,5 Gew.-% oder 7 - 12 Gew.-%, insbesondere 8 - 10 Gew.-%.

Weiterhin bevorzugt ist der Gehalt an optionalen weiteren Bestandteilen auf 1,5 Gew.-%, insbesondere auf 1,0 Gew.-%, bevorzugt auf 0,5 Gew.-%, insbesondere auf 0,3 Gew.-%, bevorzugt auf 0,10 Gew.-%, insbesondere auf 0,05 Gew.-% beschränkt. Insbesondere entsprechen die optionalen weiteren Bestandteile unvermeidbaren Verunreinigungen und sind lediglich in technisch nicht vermeidbaren Gehalten vorhanden. Dies gilt für alle zuvor alle zuvor erläuterten Schmelzenzusammensetzungen.

Bevorzugte Zusammensetzungen der Schmelze entsprechen den bevorzugten Zusammensetzungen der Al-Basisschicht und umgekehrt.

Beim Schmelztauchbeschichten diffundiert Eisen aus dem Stahlsubstrat in den flüssigen Korrosionsschutzüberzug, so dass der Korrosionsschutzüberzug des Stahlflachproduktes beim Erstarren insbesondere eine Legierungsschicht und eine Al-Basisschicht aufweist.

Die Legierungsschicht liegt auf dem Stahlsubstrat auf und grenzt unmittelbar an dieses an. Die Legierungsschicht wird im Wesentlichen aus Aluminium und Eisen gebildet. Bevorzugt besteht die Legierungsschicht aus 35 - 60 Gew.-% Fe, 5 - 20 Gew.-% Si, optionalen weiteren Bestandteilen deren Gehalt in Summe auf höchstens 5,0 Gew.-%, bevorzugt 2,0 Gew.-%, beschränkt sind, und als Rest Aluminium. Die optionalen weiteren Bestandteile beinhalten insbesondere die übrigen Bestandteile der Schmelze (das heißt Mg und Zn und gegebenenfalls die optionalen weiteren Bestandteile der Schmelze) und die übrigen Anteile des Stahlsubstrates zusätzlich zu Eisen.

Die Al-Basisschicht liegt auf der Legierungsschicht und grenzt unmittelbar an diese an. Bevorzugt entspricht die Zusammensetzung der Al-Basisschicht der Zusammensetzung der Schmelze des Schmelzbades. Das heißt, sie besteht aus 1,0 - 15,0 Gew.-% Si, optional 2 - 4 Gew.-% Fe, 0,55 - 2,00 Gew.-% Mg, 0,50 - 2,00 Gew.-% Zn, und optionalen weiteren Bestandteilen, deren Gehalte in Summe auf höchstens 2,0 Gew.-% beschränkt sind, und als Rest Aluminium. Bevorzugte Zusammensetzungen der Al-Basisschicht entsprechen den bevorzugten Schmelzenzusammensetzungen. Entsprechend gilt auch für die Al-Basisschicht, dass der Gehalt an optionalen weiteren Bestandteilen bevorzugt auf 1,5 Gew.-%, insbesondere auf 1,0 Gew.-%, bevorzugt auf 0,5 Gew.-%, insbesondere auf 0,3 Gew.-%, bevorzugt auf 0,10 Gew.-%, insbesondere auf 0,05 Gew.-% beschränkt ist. Insbesondere entsprechen die optionalen weiteren Bestandteile unvermeidbaren Verunreinigungen und sind lediglich in technisch nicht vermeidbaren Gehalten vorhanden.

Bei einer weiter bevorzugten Variante des Korrosionsschutzüberzuges ist der Si-Gehalt in der Legierungsschicht geringer als der Si-Gehalt in der Al-Basisschicht.

Der Korrosionsschutzüberzug hat bevorzugt eine Dicke von 5 - 60 $\mu$m, insbesondere von 10 - 40 $\mu$m. Das Auflagengewicht des Korrosionsschutzüberzuges beträgt insbesondere 30 - 360 g/m^2 bei beidseitigen Korrosionsschutzüberzügen bzw. 15 - 180 g/m^2 bei der einseitigen Variante. Bevorzugt beträgt das Auflagengewicht des Korrosionsschutzüberzuges 100 - 200 g/m^2 bei beidseitigen Überzügen bzw. 50 - 100 g/m^2 für einseitige Überzüge. Besonders bevorzugt beträgt das Auflagengewicht des Korrosionsschutzüberzuges 120 - 180 g/m^2 bei beidseitigen Überzügen bzw. 60 - 90 g/m^2 für einseitige Überzüge.

Die Dicke der Legierungsschicht ist bevorzugt kleiner als 20 $\mu$m, besonders bevorzugt kleiner 16 $\mu$m, besonders bevorzugt kleiner 12 $\mu$m, insbesondere kleiner 10 $\mu$m. Die Dicke der Al-Basisschicht ergibt sich aus der Differenz der Dicken von Korrosionsschutzüberzug und Legierungsschicht. Bevorzugt beträgt die Dicke der Al-Basisschicht auch bei dünnen Korrosionsschutzüberzügen mindestens 1 $\mu$m.

Bei einer bevorzugten Variante umfasst das Stahlflachprodukt eine auf dem Korrosionsschutzüberzug angeordnete Oxidschicht. Die Oxidschicht liegt dabei insbesondere auf der Al-Basisschicht und bildet bevorzugt den äußeren Abschluss des Korrosionsschutzüberzuges.

Die Oxidschicht besteht insbesondere zu mehr als 80 Gew.-% aus Oxiden, wobei der Hauptanteil der Oxide (d.h. mehr als 50 Gew.-% der Oxide) Aluminiumoxid ist. Optional sind in der Oxidschicht zusätzlich zu Aluminiumoxid Hydroxide und/oder Magnesiumoxid und/oder Zinkoxide alleine oder als Mischung vorhanden. Bevorzugt besteht der nicht von den Oxiden und optional vorhandenen Hydroxiden eingenommene Rest der Oxidschicht aus Silizium, Aluminium, Eisen, Zink und/oder Magnesium in metallischer Form.

Bevorzugt hat die Oxidschicht des Stahlflachproduktes eine Dicke, die größer ist als 50 nm. Insbesondere beträgt die Dicke der Oxidschicht maximal 500 nm.

Die Erfindung betrifft ebenfalls ein Verfahren zur Herstellung eines Stahlflachproduktes für die Warmumformung mit einem Korrosionsschutzüberzug umfassend folgende Arbeitsschritte:

a) Zurverfügungstellen einer Bramme oder einer Dünnbramme, die aus einem Stahl besteht, der 0,1 - 3 Gew.-% Mn und optional bis zu 0,01 Gew.-% B aufweist;

b) Durcherwärmen der Bramme oder Dünnbramme bei einer Temperatur (T1) von 1000 - 1400°C;

c) Optionales Vorwalzen der durcherwärmten Bramme oder Dünnbramme zu einem Zwischenprodukt mit einer Zwischenprodukttemperatur (T2) von 1000 - 1200 °C;

d) Warmwalzen zu einem warmgewalzten Stahlflachprodukt, wobei die Endwalz-Temperatur (T3) 750 - 1000 °C beträgt;

e) Optionales Haspeln des warmgewalzten Stahlflachprodukts, wobei die Haspeltemperatur (T4) höchstens 700 °C beträgt;

f) Entzundern des warmgewalzten Stahlflachprodukts;

g) Optionales Kaltwalzen des Stahlflachprodukts, wobei der Kaltwalzgrad mindestens 30 % beträgt;

h) Glühen des Stahlflachprodukts bei einer Glühtemperatur (T5) von 650 - 900 °C;

i) Abkühlen des Stahlflachprodukts auf eine Eintauchtemperatur (T6), welche 650 - 800 °C, bevorzugt 670 - 800 °C beträgt;

j) Beschichten des auf die Eintauchtemperatur abgekühlten Stahlflachprodukts mit einem Korrosionsschutzüberzug durch

    i. Eintauchen in ein Schmelzbad mit einer Schmelzentemperatur (T7) 660 - 800 °C, bevorzugt 670 - 710 °C, wobei das Schmelzbad den auf das Stahlflachprodukt aufzubringenden Korrosionsschutzüberzug in flüssiger Form enthält und aus 1,0 - 15,0 Gew.-% Si, optional 2-4 Gew.-% Fe, 0,55 - 2,00 Gew.-% Magnesium, 0,50-2,00 Gew.-% Zn, und optionalen weiteren Bestandteilen, deren Gehalte in Summe auf höchstens 2,0 Gew.-% beschränkt sind, und als Rest Aluminium besteht;

    ii. Optionales Abblasen des Stahlflachproduktes nach Austritt aus dem Schmelzbad mittels eines Gasstroms;

k) Abkühlen des beschichteten Stahlflachprodukts auf Raumtemperatur, wobei die erste Abkühldauer $t_{mT}$ im Temperaturbereich zwischen 600 °C und 450 °C mehr als 10s, insbesondere mehr als 14s beträgt und die zweite Abkühldauer $t_{nT}$ im Temperaturbereich zwischen 400 °C und 300 °C mehr als 8s, insbesondere mehr als 12s beträgt;

l) Optionales Dressieren des beschichteten Stahlflachprodukts.

In Arbeitsschritt a) wird ein entsprechend der erfindungsgemäß für das Stahlflachprodukt vorgegebenen Legierung zusammengesetztes Halbzeug zur Verfügung gestellt. Dies kann eine im konventionellen Brammenstrangguss oder im Dünnbrammenstrangguss erzeugte Bramme sein. Bevorzugte Zusammensetzungen des Stahls der Bramme oder Dünnbramme entsprechen den bevorzugten Zusammensetzungen des Stahls des zuvor beschriebenen Stahlflachproduktes.

In Arbeitsschritt b) wird das Halbzeug bei einer Temperatur (T1) von 1000 - 1400 °C durcherwärmt. Sollte das Halbzeug nach dem Vergießen abgekühlt sein, so wird das Halbzeug zum Durcherwärmen zunächst auf 1000 - 1400 °C wiedererwärmt. Die Durcherwärmungstemperatur beträgt bevorzugt mindestens 1100 °C, um eine gute Verformbarkeit für den nachfolgenden Walzprozess sicherzustellen. Die Durcherwärmungstemperatur sollte nicht mehr als 1400 °C betragen, um Anteile schmelzflüssiger Phasen im Halbzeug zu vermeiden.

Im optionalen Arbeitsschritt c) wird das Halbzeug zu einem Zwischenprodukt vorgewalzt. Dünnbrammen werden üblicherweise keiner Vorwalzung unterzogen. Dickbrammen, die zu Warmbändern ausgewalzt werden sollen, können bei Bedarf einer Vorwalzung unterzogen werden. In diesem Fall sollte die Temperatur des Zwischenprodukts (T2) am Ende des Vorwalzens mindestens 1000 °C betragen, damit das Zwischenprodukt genügend Wärme für den nachfolgenden Arbeitsschritt des Fertigwalzens enthält. Hohe Walztemperaturen können jedoch auch ein Kornwachstum während des Walzvorgangs fördern, was sich nachteilig auf die mechanischen Eigenschaften des Stahlflachprodukts auswirkt. Um das Kornwachstum während des Walzvorgangs gering zu halten, soll die Temperatur des Zwischenprodukts am Ende des Vorwalzens nicht mehr als 1200 °C betragen.

In Arbeitsschritt d) wird die Bramme oder Dünnbramme oder, wenn Arbeitsschritt c) ausgeführt wurde, das Zwischenprodukt zu einem warmgewalzten Stahlflachprodukt gewalzt. Wurde Arbeitsschritt c) ausgeführt, so wird das Zwischenprodukt typischerweise unmittelbar nach dem Vorwalzen fertiggewalzt. Typischerweise beginnt das Fertigwalzen spätestens 90s nach dem Ende des Vorwalzens. Die Bramme, die Dünnbramme oder, wenn Arbeitsschritt c) ausgeführt wurde, das Zwischenprodukt werden bei einer Endwalztemperatur (T3) ausgewalzt. Die Endwalztemperatur, das heißt die Temperatur des fertig warmgewalzten Stahlflachprodukts am Ende des Warmwalzvorgangs, beträgt 750 - 1000 °C. Die Endwalztemperatur ist auf Werte von höchstens 1000 °C begrenzt, um einer Vergröberung der Austenitkörner vorzubeugen. Außerdem sind Endwalztemperaturen von höchstens 1000 °C prozesstechnisch relevant zur Einstellung von Haspeltemperaturen (T4) kleiner 700 °C.

Das Warmwalzen des Stahlflachprodukts kann als kontinuierliches Warmbandwalzen oder als reversierendes Walzen erfolgen.

Arbeitsschritt e) sieht für den Fall des kontinuierlichen Warmbandwalzens ein optionales Haspeln des warmgewalzten Stahlflachprodukts vor. Dazu wird das Warmband nach dem Warmwalzen innerhalb von weniger als 50s auf eine Haspeltemperatur (T4) abgekühlt. Als Kühlmedium kann hierfür beispielsweise Wasser, Luft oder eine Kombination aus beidem verwendet werden. Die Haspeltemperatur (T4) sollte höchstens 700 °C betragen, um die Bildung großer Karbide (z.B. Vanadiumkarbide) zu vermeiden. Die Haspeltemperatur ist prinzipiell nicht nach unten beschränkt. Allerdings haben sich Haspeltemperaturen von mindestens 500 °C als günstig für die Kaltwalzbarkeit erwiesen. Anschließend wird das gehaspelte Warmband in konventioneller Weise an Luft auf Raumtemperatur abgekühlt.

In Arbeitsschritt f) wird das warmgewalzte Stahlflachprodukt in konventioneller Weise durch Beizen oder durch eine andere geeignete Behandlung entzundert.

Das von Zunder gereinigte warmgewalzte Stahlflachprodukt kann vor der Glühbehandlung in Arbeitsschritt g) optional einem Kaltwalzen unterzogen werden, um beispielsweise höhere Anforderungen an die Dickentoleranzen des Stahlflachprodukts zu erfüllen. Der Kaltwalzgrad (KWG) sollte dabei mindestens 30 % betragen, um in das Stahlflachprodukt genügend Verformungsenergie für eine schnelle Rekristallisation einzubringen. Unter dem Kaltwalzgrad KWG wird dabei der Quotient aus der Dickenabnahme beim Kaltwalzen $\Delta dKW$ durch die Warmbanddicke d verstanden:

$$KWG = \Delta dKW/d$$

mit $\Delta dKW$ = Dickenabnahme beim Kaltwalzen in mm und d = Warmbanddicke in mm, wobei sich die Dickenabnahme $\Delta dKW$ aus der Differenz der Dicke des Stahlflachprodukts vor dem Kaltwalzen zur Dicke des Stahlflachprodukts nach dem Kaltwalzen ergibt. Beim Stahlflachprodukt vor dem Kaltwalzen handelt es sich üblicherweise um ein Warmband der Warmbanddicke d. Das Stahlflachprodukt nach dem Kaltwalzen wird üblicherweise auch als Kaltband bezeichnet. Der Kaltwalzgrad kann prinzipiell sehr hohe Werte von über 90 % annehmen. Allerdings haben sich Kaltwalzgrade von höchstens 80 % als günstig zur Vermeidung von Bandrissen erwiesen.

In Arbeitsschritt h) wird das Stahlflachprodukt einer Glühbehandlung bei Glühtemperaturen (T5) von 650 - 900 °C unterzogen. Dazu wird das Stahlflachprodukt zunächst innerhalb von 10 bis 120s auf die Glühtemperatur erwärmt und dann 30 bis 600s bei der Glühtemperatur gehalten. Die Glühtemperatur beträgt mindestens 650 °C, bevorzugt mindestens 720 °C. Glühtemperaturen oberhalb von 900 °C sind aus ökonomischen Gründen nicht wünschenswert.

In Arbeitsschritt i) wird das Stahlflachprodukt nach dem Glühen auf eine Eintauchtemperatur (T6) abgekühlt, um es für die anschließende Beschichtungsbehandlung vorzubereiten. Die Eintauchtemperatur ist kleiner als die Glühtemperatur und wird auf die Temperatur des Schmelzbads abgestimmt. Die Eintauchtemperatur beträgt 600 - 800 °C, bevorzugt mindestens 650 °C, besonders bevorzugt mindestens 670 °C, besonders bevorzugt höchstens 720 °C.

Für eine besonders homogene Grenzschichtausbildung ist es wichtig, dass genügend thermische Energie in der Grenzschicht zwischen Stahlsubstrat und Aluminiumschmelze vorliegt. Dies ist bei tieferen Temperaturen als 600 °C nicht der Fall, sodass sich unerwünschte Verbindungen bilden können, deren spätere Rückumwandlung zu Poren führen kann. Ab den bevorzugten Eintauchtemperaturen erhöht sich die Diffusionsgeschwindigkeit von Eisen in Aluminium nochmals signifikant, sodass bereits zu Beginn des Überzugsprozesses vermehrt Eisen in die noch flüssige Grenzschicht eindiffundieren kann. Die Dauer der Abkühlung des geglühten Stahlflachprodukts von der Glühtemperatur T5 auf die Eintauchtemperatur T6 beträgt bevorzugt 10 - 180s. Insbesondere weicht die Eintauchtemperatur T6 von der Temperatur des Schmelzenbades T7 um nicht mehr als 30K, insbesondere nicht mehr als 20K, bevorzugt nicht mehr als 10K ab.

Das Stahlflachprodukt wird in Arbeitsschritt j) einer Beschichtungsbehandlung unterzogen. Die Beschichtungsbehandlung erfolgt mittels kontinuierlichem Schmelztauchbeschichten. Dabei wird das abgekühlte Stahlflachprodukt in ein Schmelzbad eingetaucht. Die Beschichtung wird dadurch auf allen Seiten des Stahlflachprodukts aufgebracht. Das Schmelzbad, das die auf das Stahlflachprodukt aufzubringende Legierung in flüssiger Form enthält, weist typischerweise eine Temperatur (T7) von 660 - 800 °C, bevorzugt 670 - 740 °C, insbesondere 680 - 710 °C auf. Das Schmelzbad besteht aus 1,0 - 15,0 Gew.-% Si, optional 2 - 4 Gew.-% Fe, 0,55 - 2,00 Gew.-% Magnesium, 0,50 - 2,00 Gew.-% Zn, und optionalen weiteren Bestandteilen, deren Gehalte in Summe auf höchstens 2,0 Gew.-% beschränkt sind, und als Rest Aluminium.

Beim Austritt aus dem Schmelzbad wird das Stahlflachprodukt bevorzugt mittels eines Gasstroms abgeblasen, wobei der Gasstrom insbesondere ein Luftstrom ist, der bevorzugt eine Temperatur von Raumtemperatur bis 130 °C, insbesondere von 50 - 90 °C, aufweist.

Nach der Beschichtungsbehandlung wird das beschichtete Stahlflachprodukt in Arbeitsschritt k) auf Raumtemperatur abgekühlt. Dabei beträgt eine erste Abkühldauer $t_{mT}$ im Temperaturbereich zwischen 600 °C und 450 °C (mittlerer Temperaturbereich mT) mehr als 10s, insbesondere mehr als 14s und eine zweite Abkühldauer $t_{nT}$ im Temperaturbereich zwischen 400 °C und 300 °C (niedriger Temperaturbereich nT) mehr als 8s, insbesondere mehr als 12s.

Dabei kann die erste Abkühldauer $t_{mT}$ im Temperaturbereich zwischen 600 °C und 450 °C (mittlerer Temperaturbereich mT) realisiert sein durch ein langsames, kontinuierliches Abkühlen oder auch durch ein Halten bei einer Temperatur für eine gewisse Zeit in diesem Temperaturbereich. Möglich ist sogar ein Zwischenheizen. Wichtig ist lediglich, dass das Stahlflachprodukt mindestens für eine Zeitdauer Abkühldauer $t_{mT}$ im Temperaturbereich zwischen 600 °C und 450 °C bleibt. In diesem Temperaturbereich liegt zum einen eine signifikante Diffusionsgeschwindigkeit von Eisen in Aluminium vor und zum anderen ist die Diffusion von Aluminium in Stahl gehemmt, da die Temperatur unter der halben Schmelztemperatur von Stahl liegt. Dies ermöglicht eine Diffusion von Eisen in den Korrosionsschutzüberzug ohne starke Diffusion von Aluminium in das Stahlsubstrat.

Die Diffusion von Eisen in den Korrosionsschutzüberzug hat gleich mehrere Vorteile:
Zum einen wird das Aufschmelzen des Korrosionsschutzüberzugs beim Austenitisieren vor dem Presshärten verzögert. Zum anderem kommt zu einer Homogenisierung der Wärmeausdehnungskoeffizienten von Korrosionsschutzüberzug und Substrat. Das heißt der Übergangsbereich zwischen Wärmeausdehnungskoeffizient Substrat und Oberfläche wird breiter, was die thermischen Spannungen beim Wiederaufheizen reduziert.

Gleichzeitig hätte das Eindiffundieren von Aluminium in das Stahlsubstrat erhebliche Nachteile: Durch die sehr hohe Affinität von Aluminium zu Stickstoff kann ein hoher Aluminium-Gehalt dazu führen, dass sich Stickstoff aus feinen Ausscheidungen, wie Niobkarbonitriden oder Titankarbonitriden löst und sich stattdessen grobe Ausscheidungen, wie Aluminiumnitride, bevorzugt auf den Korngrenzen bilden. Diese würden die Crashperformance verschlechtern, wie auch den Biegewinkel verringern. Außerdem destabilisiert dies die feinen Ausscheidungen (z.B. die Niob-haltigen Ausscheidungen) im obersten Substratbereich, welche wichtig für viele bevorzugte Eigenschaften sind. Weiterhin würde die inhomogene Diffusionsgeschwindigkeit von Aluminium im Stahlsubstrat in Ferrit gegenüber Perlit/Bainit/Martensit zu einer ungleichmäßigen Verteilung von Al in der Randschicht des Stahlsubstrats führen. Dies sollte ebenfalls zur Verbesserung der Crash- und Biegeperformance verhindert werden. Diese Nachteile des Eindiffundierens von Aluminium in das Stahlsubstrat werden durch Hemmung daher reduziert oder vermieden.

Durch die bevorzugte erste Abkühldauer $t_{mT}$ (14s) nimmt die Eisenkonzentration in der Übergangsgrenzschicht soweit zu, dass sich dadurch die Aktivität von Aluminium im Überzug direkt an der Substratgrenze weiter verringert. Dies führt dann zu einer noch weiter verringerten Aluminiumaufnahme ins Substrat bei der Austenitisierung vor dem Presshärten mit den damit verbundenen oben beschriebenen Vorteilen.

Die zweite Abkühldauer $t_{nT}$ im Temperaturbereich zwischen 400 °C und 300 °C (niedriger Temperaturbereich nT) kann ebenfalls realisiert sein durch ein langsames, kontinuierliches Abkühlen oder auch durch ein Halten bei einer Temperatur für eine gewisse Zeit in diesem Temperaturbereich. Möglich ist sogar ein Zwischenheizen. Wichtig ist lediglich, dass das Stahlflachprodukt mindestens für eine Zeitdauer Abkühldauer $t_{nT}$ im Temperaturbereich zwischen 400 °C und 300 °C bleibt.

In diesem Temperaturbereich besteht noch eine gewisse Diffusionsgeschwindigkeit von Kohlenstoff im Stahlsubstrat, während die thermodynamische Löslichkeit sehr gering ist. Somit diffundiert Kohlenstoff zu Gitterstörungen und sammelt sich dort, z.B. zu gelösten Nb-Atomen. Diese weiten durch ihr deutlich höheres Atomvolumen das Atomgitter auf und vergrößern somit die Tetraeder und Oktaederlücken im Atomgitter, sodass die lokale Löslichkeit von C erhöht ist. Dadurch ergeben sich Cluster von C und Nb, welche sich dann im Austenitisierungsschritt der Warmumformung zu sehr feinen Ausscheidungen umwandeln und zu einem verfeinerten Austenitgefüge und damit auch Härtungsgefüge, sowie einer Reduktion des freien Wasserstoffgehalts führen.

Bei der bevorzugten Haltezeit von mehr als 12s bilden sich zudem sehr feine Eisenkarbide (sogenannte Übergangskarbide), welche sich beim Austenitisieren wiederum sehr schnell auflösen und zu zusätzlichen Austenitkeimen und somit einem noch feineren Austenitgefüge und damit auch Härtungsgefüge führen.

Das beschichtete Stahlflachprodukt kann optional in Schritt l) einem Dressieren mit einem Dressiergrad von bis zu 2 % unterzogen werden, um die Oberflächenrauheit des Stahlflachprodukts zu verbessern.

Die Erfindung betrifft weiterhin ein Blechformteil geformt aus einem Stahlflachprodukt umfassend ein zuvor erläutertes Stahlsubstrat und einen Korrosionsschutzüberzug. Der Korrosionsschutzüberzug hat den Vorteil, dass er Zunderbildung verhindert während der Austenitisierung beim Warmumformen. Weiterhin schützt ein solcher Korrosionsschutzüberzug das geformte Blechformteil gegen Korrosion.

Bei einer speziellen Ausführungsform umfasst das Blechformteil bevorzugt einen Korrosionsschutzüberzug auf Aluminium-Basis. Dabei besteht der der Korrosionsschutzüberzug aus 1,0 - 15 Gew.-% Si, 15 - 35 Gew.-% Fe, 0,45 - 2,00 Gew.-% Mg, 0,40 - 2,00 Gew.-% Zn, und optionalen weiteren Bestandteilen, deren Gehalte in Summe auf höchstens 2,0 Gew.-% beschränkt sind, und als Rest Aluminium. Der Anteil von Mg und Zn liegt prozentual etwas niedriger als beim Korrosionsschutzüberzug des Stahlflachprodukts, da sich durch die Eindiffusion von Eisen die Gesamtmasse des Korrosionsschutzüberzuges erhöht.

Bei bevorzugten Ausführungsformen des Blechformteils beträgt der Zn-Gehalt mindestens 0,50 Gew.-%, insbesondere mindestens 0,70 Gew.-%, bevorzugt mindestens 1,10 Gew.-%, insbesondere mindestens 1,30 Gew.-%. Unabhängig davon beträgt der Zn-Gehalt maximal 1,80 Gew.-%, bevorzugt maximal 1,50 Gew.-%, insbesondere maximal 1,30 Gew.-%, bevorzugt maximal 1,00 Gew.-%, insbesondere maximal 0,75 Gew.-%, bevorzugt maximal 0,65 Gew.-%. Es hat sich gezeigt, dass diese Ausführungsvarianten einen guten Kompromiss zwischen der Phosphatierbarkeit und dem Risiko der Flüssigmetallversprödung darstellen.

Bei bevorzugten Ausführungsvarianten des Blechformteils beträgt der Mg-Anteil mindestens 0,55 Gew.-%, bevorzugt mindestens 0,60 Gew.-%, insbesondere mindestens 0,70 Gew.-%, bevorzugt mindestens 0,80 Gew.-%. Unabhängig davon beträgt bei bevorzugten Ausführungsformen der Mg-Anteil maximal 1,90 Gew.-%, insbesondere maximal 1,75 Gew.-%, bevorzugt maximal 1,50 Gew.-%.

Bei einer bevorzugten Variante beträgt der Si-Gehalt des Korrosionsschutzüberzuges des Blechformteils 7 - 12 Gew.-%, insbesondere 8 - 10 Gew.-%.

Weiterhin bevorzugt ist der Gehalt an optionalen weiteren Bestandteilen auf 1,5 Gew.-%, insbesondere auf 1,0 Gew.-%, bevorzugt auf 0,5 Gew.-%, insbesondere auf 0,3 Gew.-%, bevorzugt auf 0,10 Gew.-%, insbesondere auf 0,05 Gew.-% beschränkt. Insbesondere entsprechen die optionalen weiteren Bestandteile unvermeidbaren Verunreinigungen und sind lediglich in technisch nicht vermeidbaren Gehalten vorhanden.

Die Dicke des Korrosionsschutzüberzuges beträgt bevorzugt mindestens 10 $\mu$m, besonders bevorzugt mindestens 20 $\mu$m, insbesondere mindestens 30 $\mu$m.

Bevorzugt umfasst der Korrosionsschutzüberzug des Blechformteils eine Legierungsschicht und eine Al-Basisschicht. Beim Blechformteil wird die Legierungsschicht auch häufig als Interdiffusionsschicht bezeichnet.

Die Dicke der Legierungsschicht ist bevorzugt kleiner als 30 $\mu$m, besonders bevorzugt kleiner 20 $\mu$m, insbesondere kleiner 16 $\mu$m, besonders bevorzugt kleiner 12 $\mu$m. Die Dicke der Al-Basisschicht ergibt sich aus der Differenz der Dicken von Korrosionsschutzüberzug und Legierungsschicht.

Die Legierungsschicht liegt dabei auf dem Stahlsubstrat auf und grenzt unmittelbar an dieses an. Bevorzugt besteht die Legierungsschicht des Blechformteils aus 35 - 90 Gew.-% Fe, insbesondere 55 - 90 Gew.-% Fe, 0,1 - 12 Gew.-% Si und optionalen weiteren Bestandteilen, deren Gehalte in Summe auf höchstens 5,5 Gew.-%, bevorzugt 2,0 Gew.-% beschränkt sind, und als Rest Aluminium. Bei den optionalen weiteren Bestandteilen handelt es sich bevorzugt um die neben Eisen vorhandenen Elemente im Stahl des Stahlsubstrates und die übrigen Elemente aus dem Überzug wie Zn, Mg und die gegebenenfalls vorhandenen optionalen weiteren Bestandteile. Diese Elemente reichern sich nur zu einem sehr geringen Teil in der Legierungsschicht an.

Die Legierungsschicht hat bevorzugt im substratnahen Bereich ein ferritisches Gefüge.

Die Al-Basisschicht des Blechformteils liegt auf der Legierungsschicht und grenzt unmittelbar an diese an. Bevorzugt besteht die Al-Basisschicht des Blechformteils aus 35 - 55 Gew.-% Fe, 0,4 - 10 Gew.-% Si, optional bis zu 3 Gew.-% Alkali- oder Erdalkalimetallen, bevorzugt bis zu 1,0 Gew.-% Alkali- oder Erdalkalimetallen, optional bis zu 15 Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium. Bevorzugt beträgt der optionale Gehalt an Alkali- oder Erdalkalimetallen mindestens 0,1 Gew.-%. Auch für die Al-Basisschicht des Blechformteils gilt, dass der Gehalt an optionalen weiteren Bestandteilen auf bevorzugt 1,5 Gew.-%, insbesondere auf 1,0 Gew.-%, bevorzugt auf 0,5 Gew.-%, insbesondere auf 0,3 Gew.-%, bevorzugt auf 0,10 Gew.-%, insbesondere auf 0,05 Gew.-% beschränkt ist. Insbesondere entsprechen die optionalen weiteren Bestandteile unvermeidbaren Verunreinigungen und sind lediglich in technisch nicht vermeidbaren Gehalten vorhanden.

Die Al-Basisschicht kann eine homogene Elementverteilung aufweisen, bei der die lokalen Elementgehalte um nicht mehr als 10 % variieren. Bevorzugte Varianten der Al-Basisschicht weisen dagegen siliziumarme Phasen und siliziumreiche Phasen auf. Siliziumarme Phasen sind dabei Gebiete, deren mittlerer Si-Gehalt mindestens 20 % weniger beträgt als der mittlere Si-Gehalt der Al-Basisschicht. Siliziumreiche Phasen sind dabei Gebiete, deren mittlerer Si-Gehalt mindestens 20 % mehr beträgt als der mittlere Si-Gehalt der Al-Basisschicht.

Bei einer bevorzugten Variante sind die siliziumreichen Phasen innerhalb der siliziumarmen Phasen angeordnet. Insbesondere bilden die siliziumreichen Phasen eine mindestens 40 % durchgehende Schicht, die von siliziumarmen Gebieten begrenzt ist. Unter einer durchgehenden Schicht siliziumreicher Phasen ist zu verstehen, dass im senkrechten Schliffbild eine Linie so parallel zur Oberfläche des Stahlsubstrates gelegt werden kann, dass sie vollständig durch die siliziumreichen Phasen verläuft. Dagegen ist unter einer mindestens X % durchgehenden Schicht zu verstehen, dass im senkrechten Schiffbild eine Linie so parallel zur Oberfläche des Stahlsubstrates gelegt werden kann, dass sie zu mindestens X % innerhalb der siliziumreichen Phasen verläuft. Im hier vorliegenden Fall liegen die siliziumreichen Phasen also derart zusammenhängend, dass im senkrechten Schliffbild eine Linie so parallel zur Oberfläche des Stahlsubstrates gelegt werden kann, dass sie zu mindestens 40 % innerhalb der siliziumreichen Phasen verläuft. Bei einer alternativen Ausführungsvariante sind die siliziumreichen Phasen inselförmig in der siliziumarmen Phase angeordnet.

Unter "inselförmig" wird im Sinne dieser Anmeldung eine Anordnung verstanden, bei der diskrete unzusammenhängende Bereiche von einem anderen Material umschlossen werden - es sich also "Inseln" eines bestimmten Materials in einem anderen Material befinden.

Bei einer bevorzugten Variante umfasst das Blechformteil eine auf dem Korrosionsschutzüberzug angeordnete Oxidschicht. Die Oxidschicht liegt dabei insbesondere auf der Al-Basisschicht und bildet bevorzugt den äußeren Abschluss des Korrosionsschutzüberzuges.

Die Oxidschicht des Blechformteils besteht insbesondere zu mehr als 80 Gew.-% aus Oxiden, wobei der Hauptanteil der Oxide (d.h. mehr als 50 Gew.-% der Oxide) Aluminiumoxid und/oder Magnesiumoxid ist. Optional sind in der Oxidschicht zusätzlich zu Aluminiumoxid und/oder Magnesiumoxid Hydroxide alleine oder als Mischung vorhanden. Bevorzugt besteht der nicht von den Oxiden und optional vorhandenen Hydroxiden eingenommene Rest der Oxidschicht aus Silizium, Aluminium, Eisen und/oder Magnesium in metallischer Form.

Die Oxidschicht hat bevorzugt eine Dicke von mindestens 50 nm, insbesondere von mindestens 100 nm. Weiterhin beträgt die Dicke bevorzugt maximal 4 $\mu$m, insbesondere maximal 2 $\mu$m.

Bevorzugt ist das Blechformteil phosphatiert und weist dann eine Phosphatschicht auf dem Korrosionsschutzüberzug auf, bevorzugt als oberflächennächste Schicht. Bevorzugt beträgt der Phosphorgehalt der Phosphatschicht mindestens $300\,\frac{mg}{m^2}$, bevorzugt mindestens $400\,\frac{mg}{m^2}$, insbesondere mindestens $500\,\frac{mg}{m^2}$.

Dabei wird der Phosphorgehalt der Phosphatschicht bestimmt, indem eine Probe des Blechformteils zunächst in n-Heptan gereinigt wird. Anschließend wird die Phosphatschicht seitendifferenziert selektiv mittels CrO3-Lösung abgelöst. Die chemische Zusammensetzung wird dann mittels induktiv gekoppelter Plasmaspektroskopie (ICP-OES) in Anlehnung an die DIN EN ISO 10111:2019-04 und die DIN EN ISO 11885:2009-09 ermittelt. Hieraus lässt sich dann der Gewichtsanteil von Phosphor an dem Gesamtgewicht der Phosphatschicht ermitteln.

Die Erfindung betrifft ferner ein Verfahren zum Herstellen eines Blechformteils umfassend folgende Arbeitsschritte:

a) Bereitstellen eines Blechzuschnitts aus einem zuvor beschriebenen Stahlflachprodukt;

b) Erwärmen des Blechzuschnitts derart, dass zumindest teilweise die AC3-Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms + 100 °C aufweist, wobei Ms die Martensitstarttemperatur bezeichnet;

c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20s, bevorzugt höchstens 15s, beträgt;

d) Warmpressformen des Blechzuschnitts zu dem Blechformteil, wobei der Zuschnitt im Zuge des Warmpressformens über eine Dauer $t_{WZ}$ von mehr als 1s auf eine Zieltemperatur $T_{Ziel}$ abgekühlt und optional dort gehalten wird, wobei die Abkühlung von der Temperatur $T_{Einlg}$ zumindest bis zur Martensitstarttemperatur mit einer zumindest teilweise mehr als 25 K/s betragenden Abkühlgeschwindigkeit $r_{WZ}$ erfolgt;

e) Entnehmen des auf die Zieltemperatur abgekühlten Blechformteils aus dem Werkzeug.

Beim erfindungsgemäßen Verfahren wird somit ein Zuschnitt, der aus einem entsprechend den voranstehenden Erläuterungen in geeigneter Weise zusammengesetzten Stahlflachprodukt besteht, bereitgestellt (Arbeitsschritt a)), der dann in an sich bekannter Weise so erwärmt wird, dass zumindest teilweise die AC3-Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms + 100 °C beträgt. Unter teilweisem Überschreiten einer Temperatur (hier AC3 bzw. Ms + 100 °C) wird im Sinne dieser Anmeldung verstanden, dass mindestens 30 %, insbesondere mindestens 60 %, des Volumens des Zuschnitts eine entsprechende Temperatur überschreiten. Beim Einlegen in das Umformwerkzeug weist also mindestens 30 % des Zuschnitts ein austenitisches Gefüge auf, d.h. die Umwandlung vom ferritischen ins austenitische Gefüge muss beim Einlegen in das Umformwerkzeug noch nicht abgeschlossen sein. Vielmehr können bis zu 70 % des Volumens des Zuschnitts beim Einlegen in das Umformwerkzeug aus anderen Gefügebestandteilen, wie angelassenem Bainit, angelassenem Martensit und/oder nicht bzw. teilweise rekristallisiertem Ferrit bestehen. Zu diesem Zweck können bestimmte Bereiche des Zuschnitts während der Erwärmung gezielt auf einem niedrigeren Temperaturniveau gehalten werden als andere. Hierzu kann die Wärmezufuhr gezielt nur auf bestimmte Abschnitte des Zuschnitts gerichtet werden oder die Teile, die weniger erwärmt werden sollen, gegen die Wärmezufuhr abgeschirmt werden. In dem Teil des Zuschnittmaterials, dessen Temperatur niedriger bleibt, entsteht im Zuge der Umformung im Werkzeug kein oder nur deutlich weniger Martensit, so dass das Gefüge dort deutlich weicher ist als in den jeweils anderen Teilen, in denen ein martensitisches Gefüge vorliegt. Auf diese Weise kann im jeweils geformten Blechformteil gezielt ein weicherer Bereich eingestellt werden, indem beispielsweise eine für den jeweiligen Verwendungszweck optimale Zähigkeit vorliegt, während die anderen Bereiche des Blechformteils eine maximierte Festigkeit besitzen.

Maximale Festigkeitseigenschaften des erhaltenen Blechformteils können dadurch ermöglicht werden, dass die zumindest teilweise im Blechzuschnitt erreichte Temperatur zwischen Ac3 und 1000 °C, bevorzugt zwischen 850 °C und 950 °C liegt.

Dabei ist die zu überschreitende Mindesttemperatur Ac3 gemäß der von HOUGARDY, HP. in Werkstoffkunde Stahl Band 1: Grundlagen, Verlag Stahleisen GmbH, Düsseldorf, 1984, p. 229., angegebenen Formel

$$Ac3 = (902 - 225*\%C + 19*\%Si - 11*\%Mn - 5*\%Cr + 13*\%Mo - 20*\%Ni + 55*\%V) \text{ °C}$$

mit %C = jeweiliger C-Gehalt, %Si = jeweiliger Si-Gehalt, %Mn = jeweiliger Mn-Gehalt, %Cr = jeweiliger Cr-Gehalt, %Mo = jeweiliger Mo-Gehalt, %Ni =jeweiliger Ni-Gehalt und %V = jeweiliger V-Gehalt des Stahls, aus dem der Zuschnitt besteht, bestimmt.

Eine optimal gleichmäßige Eigenschaftsverteilung lässt sich dadurch erreichen, dass der Zuschnitt im Arbeitsschritt b) vollständig durcherwärmt wird und dabei bevorzugt 100 %, des Volumens über den genannten Temperaturen (AC3 bzw. Ms + 100 °C) bzw. in den genannten Temperaturintervallen liegt.

Bei einer bevorzugten Ausführungsvariante beträgt die mittlere Aufheizgeschwindigkeit $r_{Ofen}$ des Blechzuschnittes beim Erwärmen in Schritt b) mindestens 3 K/s, bevorzugt mindestens 5 K/s, insbesondere mindestens 10 K/s, bevorzugt mindestens 15 K/s. Die mittlere Aufheizgeschwindigkeit $r_{Ofen}$ ist dabei als mittlere Aufheizgeschwindigkeit von 30 °C auf 700 °C zu verstehen.

Bei einer bevorzugten Ausführungsvariante erfolgt die Erwärmung in einem Ofen mit einer Ofentemperatur $T_{Ofen}$ von mindestens 850 °C, bevorzugt mindestens 880 °C, besonders bevorzugt mindestens 900 °C, insbesondere mindestens 920 °C, und maximal 1000 °C, bevorzugt maximal 950 °C, besonders bevorzugt maximal 930 °C.

Bevorzugt beträgt der Taupunkt im Ofen beträgt hierbei mindestens -20 °C, bevorzugt mindestens -15 °C, insbesondere mindestens -5 °C, besonders bevorzugt mindestens 0 °C, insbesondere mindestens 5 °C und maximal +25 °C, bevorzugt maximal + 20 °C insbesondere maximal +15 °C.

Bei einer speziellen Ausführungsvariante erfolgt die Erwärmung in Schritt b) stufenweise in Bereichen mit unterschiedlicher Temperatur. Insbesondere erfolgt die Erwärmung in einem Rollenherdofen mit unterschiedlichen Heizzonen. Hierbei erfolgt die Erwärmung in einer ersten Heizzone mit einer Temperatur (sogenannte Ofeneinlauftemperatur) von mindestens 650 °C, bevorzugt mindestens 680 °C, insbesondere mindestens 720 °C. Maximal beträgt die Temperatur in der ersten Heizzone bevorzugt 900 °C, insbesondere maximal 850 °C. Weiterhin bevorzugt beträgt die maximale Temperatur aller Heizzonen im Ofen maximal 1200 °C, insbesondere maximal 1000 °C, bevorzugt maximal 950 °C, besonders bevorzugt maximal 930 °C.

Die Gesamtzeit im Ofen $t_{Ofen}$, die sich aus einer Erwärmungszeit und einer Haltezeit zusammensetzt, beträgt bei beiden Varianten (konstante Ofentemperatur, stufenweise Erwärmung) bevorzugt mindestens 2 Minuten, insbesondere mindestens 3 Minuten, bevorzugt mindestens 4 Minuten. Weiterhin beträgt die Gesamtzeit im Ofen bei beiden Varianten bevorzugt maximal 20 Minuten, insbesondere maximal 15 Minuten, bevorzugt maximal 12 Minuten, insbesondere maximal 8 Minuten. Längere Gesamtzeiten im Ofen haben den Vorteil, dass eine gleichmäßige Austenitisierung des Blechzuschnittes sichergestellt ist. Andererseits führt ein zu langes Halten oberhalb von Ac3 zu einer Kornvergröberung, die sich negativ auf die mechanischen Eigenschaften auswirkt.

Der so erwärmte Zuschnitt wird aus der jeweiligen Erwärmungseinrichtung, bei der es sich beispielsweise um einen konventionellen Erwärmungsofen, eine ebenso an sich bekannte Induktionserwärmungseinrichtung oder eine konventionelle Einrichtung zum Warmhalten von Stahlbauteilen handeln kann, entnommen und so schnell in das Umformwerkzeug transportiert, dass seine Temperatur beim Eintreffen in dem Werkzeug zumindest teilweise oberhalb von Ms + 100 °C liegt, bevorzugt oberhalb von 600 °C, insbesondere oberhalb von 650 °C, besonders bevorzugt oberhalb von 700 °C. Hierbei bezeichnet Ms die Martensitstarttemperatur. Bei einer besonders bevorzugten Variante liegt die Temperatur zumindest teilweise oberhalb der AC1-Temperatur. Bei allen diesen Varianten beträgt die Temperatur insbesondere maximal 900 °C. Durch diese Temperaturbereiche wird insgesamt eine gute Umformbarkeit des Materials gewährleistet.

Im Arbeitsschritt c) wird der Transfer des austenitisierten Zuschnitts von der jeweils zum Einsatz kommenden Erwärmungseinrichtung zum Umformwerkzeug innerhalb von vorzugsweise höchstens 20s, insbesondere von maximal 15s absolviert. Ein derart schneller Transport ist erforderlich, um eine zu starke Abkühlung vor der Verformung zu vermeiden.

Das Werkzeug besitzt beim Einlegen des Zuschnitts typischerweise eine Temperatur zwischen Raumtemperatur (RT) und 200 °C, bevorzugt zwischen 20 °C und 180 °C, insbesondere zwischen 50 °C und 150 °C. Optional kann das Werkzeug in einer besonderen Ausführungsform zumindest bereichsweise auf eine Temperatur $T_{WZ}$ von mindestens 200 °C, insbesondere mindestens 300 °C temperiert sein, um das Bauteil nur partiell zu härten. Weiterhin beträgt die Werkzeugtemperatur $T_{WZ}$ bevorzugt maximal 600 °C, insbesondere maximal 550 °C. Es ist lediglich sicherzustellen, dass die Werkzeugtemperatur $T_{WZ}$ unterhalb der gewünschten Zieltemperatur $T_{Ziel}$ liegt. Die Verweilzeit im Werkzeug $t_{WZ}$ beträgt bevorzugt mindestens 2s, insbesondere mindestens 3s, besonders bevorzugt mindestens 5s. Maximal beträgt die Verweilzeit im Werkzeug bevorzugt 25s, insbesondere maximal 20s.

Die Zieltemperatur $T_{Ziel}$ des Blechformteils liegt zumindest teilweise unterhalb 400 °C, bevorzugt unterhalb 300 °C, insbesondere unterhalb von 250 °C, bevorzugt unterhalb von 200 °C, besonders bevorzugt unterhalb von 180 °C, insbesondere unterhalb von 150 °C. Alternativ liegt die Zieltemperatur $T_{Ziel}$ des Blechformteils besonders bevorzugt unter Ms - 50 °C, wobei Ms die Martensitstarttemperatur bezeichnet. Weiterhin beträgt die Zieltemperatur des Blechformteils bevorzugt mindestens 20 °C, besonders bevorzugt mindestens 50 °C.

Die Martensitstarttemperatur eines im Rahmen der erfindungsgemäßen Vorgaben liegenden Stahls ist gemäß der Formel:

$$Ms \, [°C] = (490,85 - 302,6 \, \%C - 30,6 \, \%Mn - 16,6 \, \%Ni - 8,9 \, \%Cr + 2,4 \, \%Mo - 11,3 \, \%Cu + 8,58 \, \%Co + 7,4 \, \%W - 14,5 \, \%Si) \, [°C/Gew.\text{-}\%]$$

zu berechnen, wobei hier mit %C der C-Gehalt, mit %Mn der Mn-Gehalt, mit %Mo der Mo-Gehalt, mit %Cr der Cr-Gehalt, mit %Ni der Ni-Gehalt, mit %Cu der Cu-Gehalt, mit %Co der Co-Gehalt, mit %W der W-Gehalt und mit %Si der Si-Gehalt des jeweiligen Stahls in Gew.-% bezeichnet sind.

Die AC1-Temperatur und die AC3-Temperatur eines im Rahmen der erfindungsgemäßen Vorgaben liegenden Stahls ist gemäß den Formeln:

$$AC1 \, [°C] = (739 - 22*\%C - 7*\%Mn + 2*\%Si + 14*\%Cr + 13*\%Mo - 13*\%Ni + 20*\%V) \, [°C/Gew.\text{-} \%],$$

$$AC3 \, [°C] = (902 - 225*\%C + 19*\%Si - 11*\%Mn - 5*\%Cr + 13*\%Mo - 20*\%Ni + 55*\%V) \, [°C/Gew.\text{-} \%]$$

zu berechnen, wobei auch hiermit mit %C der C-Gehalt, mit %Si der Si-Gehalt, mit %Mn der Mn-Gehalt, mit %Cr der Cr-Gehalt, mit %Mo der Mo-Gehalt, mit %Ni der Ni-Gehalt und mit %V der Vanadium-Gehalt des jeweiligen Stahls bezeichnet sind (Brandis H 1975 TEW-Techn. Ber. 1 8 - 10).

Im Werkzeug wird der Zuschnitt somit nicht nur zu dem Blechformteil geformt, sondern gleichzeitig auch die Zieltemperatur abgeschreckt. Die Abkühlrate im Werkzeug $r_{WZ}$ beträgt insbesondere mindestens 25 K/s, bevorzugt mindestens 30 K/s, insbesondere mindestens 50 K/s, in besonderer Ausführung mindestens 100 K/s. Die Abkühlrate $r_{WZ}$ ist dabei definiert als die gemittelte Abkühlrate zwischen der Temperatur $T_{Einlg}$ beim Einlegen in das Umformwerkzeug und der Martensitstarttemperatur.

Bei einer bevorzugten Ausführungsform beträgt auch die Abkühlrate $r_{WZ}$ von der Einlegetemperatur $T_{Einlg}$ zur Martensitfinishtemperatur mindestens 25 K/s, bevorzugt mindestens 30 K/s, insbesondere mindestens 50 K/s, in besonderer Ausführung mindestens 100 K/s. Die Martensitfinishtemperatur wird dabei mittels Dilatometermessungen bestimmt.

Die weitere Abkühlung von der Martensitstarttemperatur bzw. der Martensitfinishtemperatur auf die Zieltemperatur $T_{Ziel}$ kann auch mit geringeren Abkühlraten erfolgen, da sich diese Abkühlung nicht mehr signifikant auf die Gefügeausbildung auswirkt.

Nach dem Entnehmen des Blechformteils in Schritt e) erfolgt ein Abkühlen des Blechformteils auf eine Abkühltemperatur $T_{AB}$ von weniger als 100 °C innerhalb einer Abkühldauer $t_{AB}$ von 0,5 bis 600s. Dies geschieht im Regelfall durch eine Luftabkühlung.

Optional wird das Blechformteil anschließend in bekannter Weise phosphatiert. Als Phosphatierungslösung werden kommerzielle Phosphatierungslösungen wie z.B.: Gardobond 26 T mit dem Additiv H7255 verwendet. Insbesondere umfassen die Phosphatierungslösungen dabei Zink, Nickel, Mangan, Phosphorsäure und Fluoride.

Näher erläutert wird die Erfindung anhand der nachfolgenden Beispiele.

Zum Nachweis der Wirkung der Erfindung wurden mehrere Versuche durchgeführt. Dafür wurden Brammen mit den in Tabelle 1 angegebenen Zusammensetzungen mit einer Dicke von 240 mm und Breite von 1200 mm erzeugt, in einem Stoßofen auf eine Temperatur T1 von 1200 °C aufgeheizt. Anschließend wurden die Brammen zwischen 30 und 450 min auf T1 gehalten, bis die Temperatur T1 im Kern der Brammen erreicht war und die Brammen somit durcherwärmt waren. Die Brammen wurden mit ihrer jeweiligen Durcherwärmungstemperatur T1 aus dem Stoßofen ausgetragen und einem Warmwalzen unterzogen. Die Versuche wurden als kontinuierliche Warmbandwalzung ausgeführt. Dazu wurden die Brammen zunächst zu einem Zwischenprodukt der Dicke 40 mm vorgewalzt, wobei die Zwischenprodukte, welche bei der Warmbandwalzung auch als Vorbänder bezeichnet werden können, am Ende der Vorwalzphase jeweils eine Zwischenprodukttemperatur T2 von 1100 °C aufwiesen. Die Vorbänder wurden unmittelbar nach der Vorwalzung dem Fertigwalzen zugeführt, sodass die Zwischenprodukttemperatur T2 der Walzanfangstemperatur für die Fertigwalzphase entspricht. Die Vorbänder wurden zu Warmbändern mit einer Enddicke von 4 mm und einer Endwalztemperatur T3 von 890 °C ausgewalzt, auf die jeweilige Haspeltemperatur abgekühlt und bei einer Haspeltemperaturen T4 von 580 °C zu Coils aufgewickelt und dann in ruhender Luft abgekühlt. Die Warmbänder wurden in konventioneller Weise mittels Beizen entzundert, bevor sie einem Kaltwalzen unterzogen wurden bis sich eine Dicke von 1,5 mm ergab. Die kaltgewalzten Stahlflachprodukte wurden in einem Durchlaufglühofen auf eine Glühtemperatur T5 von 870 °C erwärmt und für jeweils 100s auf Glühtemperatur gehalten, bevor sie mit einer Abkühlrate von 1 K/s auf die Eintauchtemperatur T6 von 690 °C abgekühlt wurden. Die Kaltbänder wurden mit ihrer jeweiligen Eintauchtemperatur T6 durch ein schmelzflüssiges Beschichtungsbad der Temperatur T7 von 673 °C geführt. Die Bandgeschwindigkeit betrug dabei in allen Fällen 76 m/min. Die Zusammensetzung des Beschichtungsbads ist in Tabelle 2 angegeben. Nach dem Beschichten wurden die beschichteten Bänder abgeblasen, um die Auflagengewichte einzustellen. Hierfür wurde ein Luftstrom mit einer Temperatur von 70 °C verwendet. Bei dem Prozess wurden die Bänder alle beidseitig beschichtet, wobei das einseitige Auflagengewicht des Überzuges in Tabelle 2 angegeben ist. Die Bänder wurden zunächst mit einer mittleren Abkühlrate von 10 - 15 K/s auf 600 °C abgekühlt. Im weiteren Abkühlverlauf zwischen 600 °C und 450 °C und zwischen 400 °C und 300 °C wurden die Bänder über die Abkühldauern $T_{mT}$ von 18s und $T_{nT}$ von 15s abgekühlt. Zwischen 450 °C und 400 °C und unterhalb von 220 °C wurden die Bänder mit einer Abkühlrate von jeweils 5 - 15 K/s abgekühlt.

Von den so erzeugten Stahlbändern sind jeweils Zuschnitte abgeteilt worden, die für die weiteren Versuche verwendet worden sind. Bei diesen Versuchen sind aus den jeweiligen Zuschnitten Blechformteil-Proben in Form von 200 × 300 mm² großen Platten warmpressgeformt worden. Dazu sind die Zuschnitte in einer Erwärmungseinrichtung, beispielsweise in einem konventionellen Erwärmungsofen, von Raumtemperatur mit einer mittleren Aufheizgeschwindigkeit $r_{Ofen}$ von 8 K/s (im Temperaturbereich zwischen 30 °C und 700 °C) in einem Ofen mit einer Ofentemperatur $T_{Ofen}$ von 920 °C erwärmt worden. Die Gesamtzeit im Ofen, die ein Erwärmen und ein Halten umfasst, ist mit $t_{Ofen}$ bezeichnet und in Tabelle 3 angegeben. Anschließend sind die Zuschnitte aus der Erwärmungseinrichtung entnommen und in ein Umformwerkzeug eingelegt worden. Beim Entnehmen aus dem Ofen hatten die Zuschnitte die Ofentemperatur angenommen. Die sich aus der für das Entnehmen aus der Erwärmungseinrichtung, den Transport zum Werkzeug und das Einlegen ins Werkzeug zusammensetzende Transferdauer lag bei etwa 9s. Die Temperatur der Zuschnitte beim Einlegen in das Umformwerkzeug lag in allen Fällen oberhalb der jeweiligen AC1-Temperatur. Das Umformwerkzeug hatte eine Temperatur $T_{WZ}$ von 60 °C. Im Umformwerkzeug sind die Zuschnitte zum jeweiligen Blechformteil umgeformt worden, wobei die Blechformteile im Werkzeug mit einer Abkühlgeschwindigkeit $r_{WZ}$ von 50 K/s abgekühlt wurden. Abschließend sind die Proben auf Raumtemperatur abgekühlt worden. Die Abkühlung erfolgte dabei an ruhender Luft mit einer Abkühlrate von 7 K/s. Diese Parameter sind nochmals in Tabelle 3 zusammengefasst.

Die so erzeugten Blechformteile wurden anschließend mit eine Phosphatierungslösung (Gardobond 26 T mit dem Additiv H7255) in bekannter Weise phosphatiert.

Die so erhaltene Phosphatschicht wurde anschließend seitendifferenziert selektiv mittels CrO3-Lösung abgelöst. Weiterhin wurde mittels induktiv gekoppelter Plasmaspektroskopie (ICP-OES) die chemische Zusammensetzung der Schicht ermittelt. Hieraus lassen sich dann die Gewichtsanteile der verschiedenen Elemente in der Phosphatschicht errechnen. In Tabelle 4 sind die Ergebnisse für die Oberseite und in Tabelle 5 für die Unterseite angegeben.

Deutlich zeigen die beiden Tabellen, dass durch die Erhöhung des Magnesium-Anteils auf 0,55 Gew.-% und mehr schon bei einem geringen Zn-Anteil von 0,5 Gew.-% (Beispiele g- z) eine ausreichend gute Phosphatierung stattfindet mit einer Phosphorauflage von mehr als $300\,\frac{mg}{m^2}$. Es zeigt sich aber auch, dass bei einem weiter ansteigenden Magnesium-Gehalt trotz vergleichsweise hohem Zink-Gehalt (Vergleiche Beispiele k und l) der Phosphatgehalt wieder abnimmt, weil sich dann eine zu dicke MgO-Schicht bildet, die die Phosphatierbarkeit verschlechtert.

**Tabelle 1 (Stahlsorten)**

| Stahl | C | Si | Mn | Al | Cr | Nb | Ti | B | P | S | N | Sn | As | Cu | Mo | Ca | Andere |
|---|---|---|---|---|---|---|---|---|---|---|---|---|---|---|---|---|---|
| A | 0,235 | 0,3 | 1,3 | 0,05 | 0,28 | 0,003 | 0,04 | 0,0035 | 0,02 | 0,003 | 0,007 | 0,03 | 0,01 | 0,03 | 0,03 | 0,005 | |

**Tabelle 2 (Beschichtungsvarianten)**

| Beschichtungsvariante | Schmelzenanalyse | | | | | | Auflagengenwicht $\left[\frac{g}{m^2}\right]$ |
|---|---|---|---|---|---|---|---|
| | Zn | Fe | Si | Mg | Sonstige | Al | |
| $\alpha^*$ | < 0,01 | 2,25 | 9,53 | 0,09 | <1% | Rest | 78,0 |
| $\beta^*$ | 0,52 | 2,12 | 10,4 | 0,32 | <1% | Rest | 77,4 |
| $\gamma$ | 0,51 | 2,07 | 10,0 | 0,56 | <1% | Rest | 76,6 |
| $\delta$ | 0,47 | 2,40 | 10,6 | 0,88 | <1% | Rest | 71,8 |
| $\varepsilon$ | 0,50 | 2,15 | 10,2 | 1,30 | <1% | Rest | 78,0 |
| $\zeta$ | 0,51 | 2,21 | 10,3 | 1,69 | <1% | Rest | 82,4 |
| $\eta^*$ | 2,05 | 1,51 | 10,1 | 0,27 | <1% | Rest | 68,6 |
| $\theta^*$ | 1,86 | 2,15 | 9,78 | 0,47 | <1% | Rest | 77,2 |
| $\tau$ | 1,76 | 1,87 | 9,78 | 0,72 | <1% | Rest | 69,8 |
| $\kappa$ | 1,58 | 1,93 | 9,83 | 1,37 | <1% | Rest | 65,8 |
| $\lambda$ | 1,66 | 1,88 | 9,53 | 1,91 | <1% | Rest | 72,3 |
| (* nicht erfindungsgemäße Vergleichsbeispiele) | | | | | | | |

**Tabelle 3 (Parameter Warmumformung)**

| Warmumformvariante | Mittlere Aufheizgeschwindigkeit $r_{Ofen}$ [30 - 700 °C] [K/s] | $T_{Ofen}$ [°C] | $t_{Ofen}$ [s] | Transferzeit [s] | Taupunkt Ofen [°C] | $T_{Einlg}$ [°C] | $T_{WZ}$ [°C] | $t_{WZ}$ [s] | Abkühlgeschwindigkeit $r_{WZ}$ [K/s] | $T_{Ziel}$ [°C] |
|---|---|---|---|---|---|---|---|---|---|---|
| I | 8 | 920 | 300 | 9 | -5 | 800 | RT | 15 | 50 | 50 |
| Angaben teilweise gerundet | | | | | | | | | | |

**Tabelle 4 (Zusammensetzung der Phosphatschicht; Oberseite)**

| Beschichtungsvariante | $\left[\frac{mg}{m^2}\right]$ Zn | $\left[\frac{mg}{m^2}\right]$ P | $\left[\frac{mg}{m^2}\right]$ Mn | $\left[\frac{mg}{m^2}\right]$ Ni | $\left[\frac{mg}{m^2}\right]$ Fe | $\left[\frac{mg}{m^2}\right]$ Al | $\left[\frac{mg}{m^2}\right]$ Mg | $\left[\frac{mg}{m^2}\right]$ Si |
|---|---|---|---|---|---|---|---|---|
| $\alpha^*$ | 71 | 39 | 9 | 2,8 | 11,5 | 12,3 | 0,5 | <1,0 |
| $\beta^*$ | 155 | 72 | 19 | 5,5 | 15,2 | 16,2 | 1,0 | 1,5 |
| $\gamma$ | 1042 | 434 | 126 | 32,3 | 61,2 | 32,1 | 6,7 | 1,8 |
| $\delta$ | 1991 | 778 | 245 | 59,2 | 98,3 | 40,1 | 23,2 | 2,6 |
| $\varepsilon$ | 2102 | 840 | 275 | 68,5 | 141,5 | 42,2 | 46,3 | 1,9 |
| $\zeta$ | 2099 | 817 | 261 | 63,3 | 90,4 | 33,4 | 59,3 | 2,2 |
| $\eta^*$ | 332 | 130 | 35 | 9,0 | 23,0 | 18,3 | 1,7 | 1,5 |
| $\theta^*$ | 576 | 226 | 70 | 16,6 | 22,7 | 15,2 | 8,9 | 1,7 |
| $\tau$ | 1621 | 631 | 188 | 49,2 | 74,4 | 37,3 | 43,1 | 1,1 |
| $\kappa$ | 1839 | 729 | 236 | 59,1 | 89,3 | 39,4 | 102,1 | 1,2 |
| $\lambda$ | 1362 | 545 | 170 | 46,3 | 70,2 | 37,9 | 263,3 | 1,2 |
| (* nicht erfindungsgemäße Vergleichsbeispiele) | | | | | | | | |

**Tabelle 5 (Zusammensetzung der Phosphatschicht; Unterseite)**

| Beschichtungsvariante | $\left[\frac{mg}{m^2}\right]$ Zn | $\left[\frac{mg}{m^2}\right]$ P | $\left[\frac{mg}{m^2}\right]$ Mn | $\left[\frac{mg}{m^2}\right]$ Ni | $\left[\frac{mg}{m^2}\right]$ Fe | $\left[\frac{mg}{m^2}\right]$ Al | $\left[\frac{mg}{m^2}\right]$ Mg | $\left[\frac{mg}{m^2}\right]$ Si |
|---|---|---|---|---|---|---|---|---|
| $\alpha^*$ | 48 | 30 | 7 | 2,3 | 10,9 | 12,7 | <0,5 | <1,0 |
| $\beta^*$ | 125 | 58 | 15 | 4,4 | 18,2 | 19,6 | 2,1 | 2,0 |
| $\gamma$ | 1213 | 503 | 149 | 38,2 | 75,7 | 38,0 | 8,6 | 1,5 |
| $\delta$ | 1951 | 770 | 244 | 59,8 | 109,4 | 47,2 | 28,2 | 1,9 |
| $\varepsilon$ | 2107 | 830 | 266 | 65,7 | 122,5 | 41,6 | 48,8 | 1,7 |
| $\zeta$ | 1698 | 662 | 214 | 52,4 | 75,8 | 27,5 | 50,2 | 1,1 |
| $\eta^*$ | 286 | 111 | 30 | 7,7 | 19,1 | 15,9 | 1,6 | 2,6 |
| $\theta^*$ | 703 | 269 | 80 | 19,1 | 22,5 | 16,6 | 11,7 | <1,0 |
| $\tau$ | 1426 | 562 | 163 | 42,9 | 67,0 | 37,3 | 38,8 | 1,4 |
| $\kappa$ | 1367 | 548 | 170 | 43,2 | 66,1 | 52,5 | 129,8 | 1,5 |
| $\lambda$ | 879 | 363 | 113 | 31,5 | 42,7 | 35,0 | 384,0 | 1,7 |
| (* nicht erfindungsgemäße Vergleichsbeispiele) | | | | | | | | |

**Patentansprüche**

1. Stahlflachprodukt zur Herstellung eines Blechformteils durch Warmumformen, aufweisend ein Stahlsubstrat, das aus einem Stahl, der 0,1-3 Gew.-% Mn und optional bis zu 0,01 Gew.-% B aufweist, besteht und einen auf mindestens einer Seite des Stahlsubstrats angeordneten Korrosionsschutzüberzugs auf Aluminium-Basis **dadurch gekennzeichnet, dass** der Korrosionsschutzüberzug eine Al-Basisschicht aufweist, die aus 1,0 - 15,0 Gew.-% Si, optional 2 - 4 Gew.-% Fe, 0,55 - 2,00 Gew.-% Mg, 0,50 - 2,00 Gew.-% Zn, und optionalen weiteren Bestandteilen, deren Gehalte in Summe auf höchstens 2,0 Gew.-% beschränkt sind, und als Rest Aluminium besteht.

2. Stahlflachprodukt nach Anspruch 1, **dadurch gekennzeichnet, dass** der Korrosionsschutzüberzug eine Legierungsschicht aufweist, die auf dem Stahlsubstrat aufliegt und auf der die AI-Basisschicht angeordnet ist, wobei die Legierungsschicht aus 35 - 60 Gew.-% Fe, optionalen weiteren Bestandteilen, deren Gehalte in Summe auf höchstens 5,0 Gew.-% beschränkt sind, und als Rest Aluminium besteht.

3. Stahlflachprodukt nach einem der Ansprüche 1 bis 2, **dadurch gekennzeichnet, dass** der Korrosionsschutzüberzug eine Dicke von 5 - 60 $\mu$m aufweist

4. Verfahren zum Herstellen eines Stahlflachproduktes für die Warmumformung, insbesondere nach einem der Ansprüche 1 bis 3, mit einem Korrosionsschutzüberzug umfassend folgende Arbeitsschritte:

   a) Zurverfügungstellen einer Bramme oder einer Dünnbramme, die aus einem Stahl besteht, der 0,1 - 3 Gew.-% Mn und optional bis zu 0,01 Gew.-% B aufweist;
   b) Durcherwärmen der Bramme oder Dünnbramme bei einer Temperatur (T1) von 1000 - 1400 °C;
   c) Optionales Vorwalzen der durcherwärmten Bramme oder Dünnbramme zu einem Zwischenprodukt mit einer Zwischenprodukttemperatur (T2) von 1000 - 1200 °C;
   d) Warmwalzen zu einem warmgewalzten Stahlflachprodukt, wobei die Endwalztemperatur (T3) 750 - 1000 °C beträgt;
   e) Optionales Haspeln des warmgewalzten Stahlflachprodukts, wobei die Haspeltemperatur (T4) höchstens 700 °C beträgt;
   f) Entzundern des warmgewalzten Stahlflachprodukts;
   g) Optionales Kaltwalzen des Stahlflachprodukts, wobei der Kaltwalzgrad mindestens 30 % beträgt;
   h) Glühen des Stahlflachprodukts bei einer Glühtemperatur (T5) von 650 - 900 °C;
   i) Abkühlen des Stahlflachprodukts auf eine Eintauchtemperatur (T6), welche 650 - 800 °C, bevorzugt 670 - 720 °C beträgt;
   j) Beschichten des auf die Eintauchtemperatur abgekühlten Stahlflachprodukts mit einem Korrosionsschutzüberzug durch

   i. Eintauchen in ein Schmelzbad mit einer Schmelzentemperatur (T7) 660 - 800 °C, bevorzugt 680 - 710 °C, wobei das Schmelzbad den auf das Stahlflachprodukt aufzubringenden Korrosionsschutzüberzug in flüssiger Form enthält und aus 1,0 -15,0 Gew.-% Si, optional 2 - 4 Gew.-% Fe, 0,55 - 2,00 Gew.-% Mg, 0,50 - 2,00 Gew.-% Zn, und optionalen weiteren Bestandteilen, deren Gehalte in Summe auf höchstens 2,0 Gew.-% beschränkt sind, und als Rest Aluminium besteht;
   ii. Abblasen des Stahlflachproduktes nach Austritt aus dem Schmelzbad mittels eines Gasstroms.

   k) Abkühlen des beschichteten Stahlflachprodukts auf Raumtemperatur, wobei die erste Abkühldauer $t_{mT}$ im Temperaturbereich zwischen 600 °C und 450 °C mehr als 10s, insbesondere mehr als 14s beträgt und die zweite Abkühldauer $t_{nT}$ im Temperaturbereich zwischen 400 °C und 300 °C mehr als 8s, insbesondere mehr als 12s beträgt;
   l) Optionales Dressieren des beschichteten Stahlflachprodukts.

5. Verfahren nach Anspruch 4, **dadurch gekennzeichnet, dass** der Gasstrom ein Luftstrom ist, der bevorzugt eine Temperatur von Raumtemperatur bis 130 °C, bevorzugt von 50 - 90 °C, aufweist.

6. Blechformteil, insbesondere geformt aus einem Stahlflachprodukt nach einem der Ansprüche 1 bis 3, aufweisend

   a) ein Stahlsubstrat, das aus einem Stahl, der 0,1 - 3 Gew.-% Mn und optional bis zu 0,01 Gew.-% B aufweist, besteht
   b) und einen auf mindestens einer Seite des Stahlsubstrats angeordneten Korrosionsschutzüberzugs auf Aluminium-Basis

   **dadurch gekennzeichnet, dass** der Korrosionsschutzüberzug aus 1,0 - 15 Gew.-% Si, 15 - 35 Gew.-% Fe, 0,45 - 2,00 Gew.-% Mg, 0,40 - 2,00 Gew.-% Zn, und optionalen weiteren Bestandteilen, deren Gehalte in Summe auf höchstens 2,0 Gew.-% beschränkt sind, und als Rest Aluminium besteht.

7. Blechformteil nach Anspruch 6, **dadurch gekennzeichnet, dass** das Blechformteil eine Phosphatschicht auf dem Korrosionsschutzüberzug aufweist, wobei der Phosphorgehalt der Phosphatschicht insbesondere mindestens $300 \frac{mg}{m^2}$ beträgt.

**8.** Blechformteil nach einem der Anspruche 6 bis 7, **dadurch gekennzeichnet, dass** die Phosphatschicht die oberflächennächste Schicht ist.

**9.** Blechformteil nach einem der Ansprüche 6 bis 8, **dadurch gekennzeichnet, dass** der Korrosionsschutzüberzug eine Al-Basisschicht und eine Legierungsschicht aufweist, wobei die Legierungsschicht auf dem Stahlsubstrat aufliegt und die Al-Basisschicht auf der Legierungsschicht aufliegt.

**10.** Blechformteil nach einem der Ansprüche 6 bis 9 **dadurch gekennzeichnet, dass** das Stahlsubstrat des Blechformteils ein Gefüge mit zumindest teilweise mehr als 80 % Martensit, bevorzugt mehr zumindest teilweise mehr als 90 % Martensit, aufweist.

**11.** Verfahren zum Herstellen eines Blechformteils umfassend folgende Arbeitsschritte:

a) Bereitstellen eines Blechzuschnitts aus einem Stahlflachprodukt nach einem der Ansprüche 1 bis 3;
b) Erwärmen des Blechzuschnitts derart, dass zumindest teilweise die AC3-Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms + 100 °C aufweist, wobei Ms die Martensitstarttemperatur bezeichnet;
c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20s, bevorzugt höchstens 15s, beträgt;
d) Warmpressformen des Blechzuschnitts zu dem Blechformteil, wobei der Zuschnitt im Zuge des Warmpressformens über eine Dauer $t_{WZ}$ von mehr als 1s auf eine Zieltemperatur $T_{Ziel}$ abgekühlt und optional dort gehalten wird, wobei die Abkühlung von der Temperatur $T_{Einlg}$ zumindest bis zur Martensitstarttemperatur mit einer zumindest teilweise mehr als 25 K/s betragenden Abkühlgeschwindigkeit $r_{WZ}$ erfolgt;
e) Entnehmen des auf die Zieltemperatur $T_{Ziel}$ abgekühlten Blechformteils aus dem Werkzeug;
f) Optionales Phosphatieren des Blechformteils.

**12.** Verfahren nach Anspruch 11, wobei die zumindest teilweise im Blechzuschnitt erreichte Temperatur zwischen Ac3 und 1000 °C, bevorzugt zwischen 850 °C und 950 °C liegt.

**13.** Verfahren nach einem der Ansprüche 11 bis 12, wobei die Zieltemperatur $T_{Ziel}$ des Blechformteils zumindest teilweise unterhalb 400 °C, bevorzugt unterhalb 300 °C liegt.

Europäisches
Patentamt

European
Patent Office

Office européen
des brevets

**EUROPÄISCHER RECHERCHENBERICHT**

**Nummer der Anmeldung**

EP 24 17 8358

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 324 950 A1 (THYSSENKRUPP STEEL EUROPE AG [DE]) 21. Februar 2024 (2024-02-21) | 1-4,6-13 | INV. C23C2/02 |
| Y | * Absätze [0102], [0103]; Ansprüche 1-20 * | 5 | C21D8/02 C21D8/04 C21D9/46 |
| X | WO 2023/020932 A1 (THYSSENKRUPP STEEL EUROPE AG [DE]) 23. Februar 2023 (2023-02-23) | 1-4,6-13 | C23C2/12 C23C2/16 C23C2/18 |
| Y | * Seite 25; Ansprüche 1-18 * | 5 | C23C2/20 C23C2/26 |
| Y | EP 4 174 207 A1 (THYSSENKRUPP STEEL EUROPE AG [DE]) 3. Mai 2023 (2023-05-03) * Ansprüche 1-17 * | 5 | C23C2/28 C23C28/02 C23C28/00 C23C30/00 |
| E | WO 2024/126085 A1 (THYSSENKRUPP STEEL EUROPE AG [DE]) 20. Juni 2024 (2024-06-20) * Ansprüche 1-12 * | 1-4,6, 9-13 | C22C38/04 C22C21/02 C22C21/06 C22C21/10 |
| A | DE 10 2024 104377 A1 (THYSSENKRUPP STEEL EUROPE AG [DE]) 4. April 2024 (2024-04-04) * Ansprüche 1-13 * | 1-13 | |

**RECHERCHIERTE SACHGEBIETE (IPC)**

C23C
C21D
C22C

Der vorliegende Recherchenbericht wurde für alle Patentansprüche erstellt

| Recherchenort | Abschlußdatum der Recherche | Prüfer |
|---|---|---|
| Den Haag | 23. Juli 2024 | Chalaftris, Georgios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                    
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 24 17 8358**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | | | C21D6/00 C21D7/13 |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 23. Juli 2024 | Chalaftris, Georgios |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 24 17 8358

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2024

| Im Recherchenbericht angeführtes Patentdokument | Datum der Veröffentlichung | Mitglied(er) der Patentfamilie | Datum der Veröffentlichung |
|---|---|---|---|
| EP 4324950 A1 | 21-02-2024 | EP 4324950 A1 | 21-02-2024 |
| | | WO 2024038037 A1 | 22-02-2024 |
| WO 2023020932 A1 | 23-02-2023 | EP 4388141 A1 | 26-06-2024 |
| | | WO 2023020932 A1 | 23-02-2023 |
| EP 4174207 A1 | 03-05-2023 | EP 4174207 A1 | 03-05-2023 |
| | | US 2023136262 A1 | 04-05-2023 |
| | | US 2024117458 A1 | 11-04-2024 |
| WO 2024126085 A1 | 20-06-2024 | DE 102022132918 A1 | 13-06-2024 |
| | | WO 2024126085 A1 | 20-06-2024 |
| DE 102024104377 A1 | 04-04-2024 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2086755 B1
- EP 3189174 B1

- WO 2023202765 A1

**In der Beschreibung aufgeführte Nicht-Patentliteratur**

- Grundlagen. **HOUGARDY, HP.** Werkstoffkunde Stahl. Verlag Stahleisen GmbH, 1984, vol. 1, 229

- **BRANDIS H**. *TEW-Techn. Ber.*, 1975, vol. 1, 8-10